(19) Europäisches Patentamt / European Patent Office / Office européen des brevets

(11) **EP 4 596 167 A1**

(12) **EUROPEAN PATENT APPLICATION**
published in accordance with Art. 153(4) EPC

(43) Date of publication:
06.08.2025 Bulletin 2025/32

(21) Application number: 22961044.9

(22) Date of filing: 30.09.2022

(51) International Patent Classification (IPC):
*B23K 35/30* (2006.01)    *B23K 35/368* (2006.01)

(52) Cooperative Patent Classification (CPC):
B23K 35/368; B23K 35/02; B23K 35/0266;
B23K 35/30; B23K 35/3053; B23K 35/3066;
B23K 35/3073; B23K 35/3086; B23K 35/362;
C22C 19/05

(86) International application number:
PCT/JP2022/036865

(87) International publication number:
WO 2024/069985 (04.04.2024 Gazette 2024/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: NIPPON STEEL CORPORATION
Chiyoda-ku
Tokyo 100-8071 (JP)

(72) Inventors:
• MATSUO, Hajime
  Tokyo 100-8071 (JP)
• KAMO, Takahiro
  Tokyo 100-8071 (JP)

(74) Representative: Vossius & Partner
Patentanwälte Rechtsanwälte mbB
Siebertstrasse 3
81675 München (DE)

(54) **FLUX CORED WIRE AND METHOD FOR FORMING WELDED JOINT**

(57) A flux-cored wire including a steel sheath and a flux, in which a chemical composition of the steel sheath includes C: from 0% to 0.650%, Si: from 0.03% to 0.50%, Mn: from 3.1% to 30.0%, P: from 0% to 0.050%, S: from 0% to 0.050%, Cu: from 0% to 5.0%, Ni: from 1.0% to 30.0%, Cr: from 0% to 10.0%, Mo: from 0% to 10.0%, Nb: from 0% to 1.0%, V: from 0% to 1.0%, Co: from 0% to 1.0%, Pb: from 0% to 1.0%, Sn: from 0% to 1.0%, Al: from 0% to 0.10%, Ti: from 0% to 0.10%, B: from 0% to 0.1000%, N: from 0% to 0.500%, balance: Fe and impurities, Mn + Ni ≥ 5.0%, Mn + Ni + Cr ≥ 15.0% or more, and a fraction of fcc in the steel sheath is 70% or more.

EP 4 596 167 A1

**Description**

BACKGROUND

Technical Field

The present disclosure relates to a flux-cored wire and a method of manufacturing a welded joint.

Background Art

In recent years, with tougher regulations of carbon dioxide emission due to global warming problem, demand for hydrogen fuel that emits no carbon dioxide as compared with petroleum, coal, and the like, natural gas that emits less carbon dioxide, and the like has increased. Along with this, demand for construction of liquid hydrogen tanks, liquid carbon dioxide tanks, LNG tanks, and the like used in ships, the ground, and the like is also increasing worldwide. For steel materials used for liquid hydrogen tanks, liquid carbon dioxide tanks, LNG tanks, and the like, Ni-based low temperature steels containing from 6% to 9% of Ni are used from the demand for securing toughness at an extremely low temperature of -196°C.

For welding these Ni-based low temperature steels, an austenitic flux-cored wire with which a weld metal having excellent low-temperature toughness can be obtained is used. The flux-cored wire is mainly designed to have a Ni content of 70%.

For example, as the flux-cored wire having a Ni content of 70%, Patent Literature 1 discloses a "flux-cored wire containing, as a sheath, a Ni-based alloy, a Ni content being from 35% to 70%, the flux containing TiOz, SiOz, and $ZrO_2$ in a total amount of 4.0 mass% or more with respect to a total mass of the wire, further containing a Mn oxide in an amount of from 0.6 mass% to 1.2 mass% in terms of $MnO_2$, and when contents of $TiO_2$, $SiO_2$, $ZrO_2$, and $MnO_2$ (converted amount) are represented, by mass%, as $[TiO_2]$, $[SiOz]$, $[ZrO_2]$, and $[MnO_2]$, respectively, $[TiO_2]/[ZrO_2]$ being from 2.3 to 3.3, $[SiO_2]/[ZrO_2]$ being from 0.9 to 1.5, and $([TiO_2] + [SiO_2] + [ZrO_2])/[MnO_2]$ being from 5 to 13.

Patent Literature 1: Japanese Patent Application Laid-Open (JP-A) No. 2008-246507

SUMMARY OF INVENTION

Technical Problem

However, a wire designed to have a Ni content of 70% for securing low-temperature toughness of a weld metal is very expensive, and an inexpensive wire is required.

Although expensive Ni is known as an austenite stabilizing element, inexpensive Mn has a similar effect. Therefore, when the Ni content is reduced and the Mn content is increased, a weld metal which is inexpensive and has excellent low-temperature toughness can be obtained. However, only by increasing Mn, a large amount of fumes are generated. When the amount of fumes increases, visibility of molten metal or an arc state deteriorates, which causes welding defects.

Therefore, an object of the present invention is to provide a flux-cored wire which is inexpensive and with which a weld metal having excellent low-temperature toughness can be obtained and the amount of fumes generated can be reduced, and a method of manufacturing a welded joint using the flux-cored wire.

Solution to Problem

Means for solving the problems includes the following aspects.

<1> A flux-cored wire for welding, including:

a steel sheath; and
a flux filled in the steel sheath,
in which a chemical composition of the steel sheath consists of, by mass% with respect to a total mass of the steel sheath:

C: from 0% to 0.650%,
Si: from 0.03% to 0.50%,
Mn: from 3.1% to 30.0%,
P: from 0% to 0.050%,

S: from 0% to 0.050%,
Cu: from 0% to 5.0%,
Ni: from 1.0% to 30.0%,
Cr: from 0% to 10.0%,
Mo: from 0% to 10.0%,
Nb: from 0% to 1.0%,
V: from 0% to 1.0%,
Co: from 0% to 1.0%,
Pb: from 0% to 1.0%,
Sn: from 0% to 1.0%,
Al: from 0% to 0.10%,
Ti: from 0% to 0.10%,
B: from 0% to 0.1000%,
N: from 0% to 0.500%,
O: from 0% to 0.0050%, and
balance: Fe and impurities,
wherein:

a total (Mn + Ni) of a content of the Mn and a content of the Ni is 5.0% or more,
a total (Mn + Ni + Cr) of the content of the Mn, the content of the Ni, and a content of the Cr is 15.0% or more, and
a fraction of fcc in the steel sheath as determined by a magnetic induction method is 70% or more.

<2> The flux-cored wire described in <1>, in which in the chemical composition of the steel sheath, a mass ratio (Ni/Mn) of the content of the Mn and the content of the Ni is 0.10 or more.
<3> The flux-cored wire described in <2>, in which the mass ratio (Ni/Mn) is 1.00 or more.
<4> The flux-cored wire described in any one of <1> to <3>, in which a content of the Ti is Ti: from 0.003% to 0.10%.
<5> The flux-cored wire described in any one of <1> to <4>, in which a metal component in the chemical composition of the flux-cored wire excluding an oxide, a fluoride, a nitride, a metal carbonate consists of, by mass% with respect to a total mass of the flux-cored wire:

C: from 0.020% to 0.650%,
Si: from 0.20% to 0.80%,
Mn: from 1.5% to 30.0%,
P: from 0% to 0.050%,
S: from 0% to 0.050%,
Cu: from 0% to 10.0%,
Ni: from 5.0% to 30.0%,
Cr: from 2.0% to 10.0%,
Mo: from 0% to 10.0%,
Nb: from 0% to 5.00%,
V: from 0% to 5.0%,
Co: from 0% to 1.0%,
Pb: from 0% to 1.0%,
Sn: from 0% to 1.0%,
W: from 0% to 10.0%,
Mg: from 0% to 1.00%,
Al: from 0% to 3.000%,
Ca: from 0% to 0.100%,
Ti: from 0% to 3.000%,
B: from 0% to 0.1000%,
REM: from 0% to 0.100%,
Bi: from 0% to 0.050%,
N: from 0% to 1.000%,
O: from 0% to 0.020%, and
balance: Fe and impurities.

<6> The flux-cored wire described in <5>, in which in the chemical composition of the flux-cored wire, a mass ratio (Ni/Mn) of a content of the Mn and a content of the Ni is 0.200 or more.

<7> The flux-cored wire described in any one of <1> to <6>, in which the flux-cored wire contains, by mass% with respect to a total mass of the flux-cored wire,

a total of $TiO_2$-equivalent values of a Ti oxide of from 3.00% to 8.00%,
a total of $SiO_2$-equivalent values of a Si oxide of from 0% to 1.00%,
a total of $ZrO_2$-equivalent values of a Zr oxide of from 0% to 0.80%, and
a total of $Al_2O_3$-equivalent values of an Al oxide of from 0% to 0.80%.

<8> The flux-cored wire described in any one of <1> to <7>, in which the flux-cored wire contains, by mass% with respect to a total mass of the flux-cored wire,

one or more fluorides of $K_2SiF_6$, $K_2ZrF_6$, NaF, $Na_3AlF_6$, $CaF_2$, and $MgF_2$, a total of which is from 0.10% to 2.00%,
one or more Na-containing compounds of Na oxide, NaF, and $Na_3AlF_6$, a total of which is from 0.01% to 2.00%, wherein the Na oxide is a $Na_2O$-equivalent value, and
one or more K-containing compounds of K oxide, $K_2SiF_6$, and $K_2ZrF_6$, a total of which is from 0.01% to 2.00%, wherein the K oxide is a $K_2O$-equivalent value.

<9> The flux-cored wire described in any one of <1> to <8>, in which an X value as calculated by the following Formula A is from 0.10 to 160.00,

$$X = (8 \times CaF_2 + 5 \times MgF_2 + 5 \times NaF + 5 \times K_2SiF_6 + 5 \times K_2ZrF_6 + Na_3AlF_6)/(SiO_2 + Al_2O_3 + ZrO_2 + 0.5 \times MgO + CaO + 0.5 \times Na_2O + 0.5 \times K_2O + MnO_2 + FeO)$$    Formula A

wherein, $CaF_2$, $MgF_2$, NaF, $K_2SiF_6$, $K_2ZrF_6$, and $Na_3AlF_6$ each indicate, by mass% with respect to a total mass of the flux-cored wire, a content of a compound represented by each chemical formula; $SiO_2$ represents a total of $SiO_2$-equivalent values of a Si oxide, $Al_2O_3$ represents a total of $Al_2O_3$-equivalent values of an Al oxide, $ZrO_2$ represents a total of $ZrO_2$-equivalent values of a Zr oxide, MgO represents a total of MgO-equivalent values of a Mg oxide, CaO represents a total of CaO-equivalent values of a Ca oxide, $Na_2O$ represents a total of $Na_2O$-equivalent values of a Na oxide, $K_2O$ represents a total of $K_2O$-equivalent values of a K oxide, $MnO_2$ represents a total of $MnO_2$-equivalent values of a Mn oxide, and FeO represents a total of FeO-equivalent values of a Fe oxide; and

wherein the $SiO_2$-equivalent values, the $Al_2O_3$-equivalent values, the $ZrO_2$-equivalent values, the MgO-equivalent values, the CaO-equivalent values, the $Na_2O$-equivalent values, the $K_2O$-equivalent values, the $MnO_2$-equivalent values, and the FeO-equivalent values in Formula A are represented by mass% with respect to the total mass of the flux-cored wire.

<10> The flux-cored wire described in any one of <1 > to <9>, in which the steel sheath has no welded part at a seam.
<11> The flux-cored wire described in any one of <1> to <9>, in which the steel sheath has a welded part at a seam.
<12> The flux-cored wire described in any one of <1> to <11>, in which one or both of polytetrafluoroethylene oil or perfluoropolyether oil is applied to a surface of the flux-cored wire.
<13> A method of manufacturing a welded joint, including a step of welding a steel material by using the flux-cored wire described in any one of <1> to <12>.

Advantageous Effects of Invention

According to the disclosure, it is possible to provide a flux-cored wire which is inexpensive and with which a weld metal having excellent low-temperature toughness can be obtained and the amount of fumes generated can be reduced, and a method of manufacturing a welded joint using the flux-cored wire.

DESCRIPTION OF EMBODIMENTS

An exemplary embodiment of the disclosure will be described.
In the present specification, a numerical range that has been indicated by use of "to" in a case in which "more than" and "less than" are not attached to numerical values which are described before and after "to" means a range including these numerical values as a lower limit value and an upper limit value. A numerical range in a case in which "more than" or "less than" is attached to the numerical values which are described before and after "to" means a range not including these numerical values as the lower limit value or the upper limit value.

In a numerical range described in a stepwise manner in the present specification, an upper limit value in one stepwise numerical range may be replaced with an upper limit value in another numerical range described in a stepwise manner, or may be replaced with a value shown in Examples. A lower limit value in one stepwise numerical range may be replaced with a lower limit value in another numerical range described in a stepwise manner, or may be replaced with a value shown in Examples.

As for the content, "%" means "% by mass".

"0 to" as the content (%) means that the component is an optional component and is not necessarily contained.

<Flux-Cored Wire>

A flux-cored wire according to the disclosure (hereinafter, simply referred to as "wire" in some cases) includes a steel sheath (hereinafter, also simply referred to as "sheath" in some cases) and a flux filled in the steel sheath.

In the flux-cored wire according to the disclosure, a chemical composition of the steel sheath has a predetermined composition. In the flux-cored wire according to the disclosure, a metal component in a chemical composition of the flux-cored wire preferably has a predetermined composition, preferably includes a Ti oxide, a Si oxide, a fluoride, a Na-containing compound, and a K-containing compound in predetermined amounts, and preferably does not contain a Zr oxide or an Al oxide or contains a Zr oxide or an Al oxide in a predetermined amount.

With the above configuration, the flux-cored wire according to the disclosure is a wire which is inexpensive and with which a weld metal having excellent low-temperature toughness can be obtained and the amount of fumes generated can be reduced.

The flux-cored wire according to the disclosure has been found from the following findings.

The inventors have studied a technique for obtaining a wire in which the low-temperature toughness of the weld metal is improved and the amount of fumes generated can be reduced even when the Ni content is reduced and the Mn content is increased. As a result, the following findings were obtained.

The fume is an object obtained by releasing metal vapor generated from the melt pool into the air by arc force and solidifying the metal vapor. By controlling the arc force, the amount of fumes generated can be reduced. The arc force varies depending not only on the welding conditions but also on the components of the steel sheath. Specifically, by controlling the contents of Ni and Mn contained in the steel sheath and functioning as austenite stabilizing elements, the Ni content in the entire wire is reduced, and even when the Mn content is increased, the arc force is relaxed, a weld metal having excellent low-temperature toughness can be obtained, and the amount of fumes generated can also be reduced.

From the above findings, it is found that the flux-cored wire according to the disclosure is a wire which is inexpensive and with which a weld metal having excellent low-temperature toughness can be obtained and the amount of fumes generated can be reduced.

The inventors have studied an oxide, a Na-containing compound, and a K-containing compound in the wire, and as a result, have found that the low-temperature toughness is further improved by controlling the amounts thereof.

From the above findings, it is found that the flux-cored wire according to the disclosure preferably contains an oxide, a Na-containing compound, and a K-containing compound in predetermined amounts, thereby obtaining a wire which is inexpensive and with which a weld metal having more excellent low-temperature toughness can be obtained and the amount of fumes generated can be reduced.

Hereinafter, the reasons for limiting the requirements (including optional requirements) constituting the flux-cored wire according to the disclosure will be specifically described.

(Chemical Composition of Steel Sheath)

Hereinafter, the chemical composition of the steel sheath will be described in detail.

In the description of the chemical composition of the steel sheath, "%" means "by mass% with respect to the total mass of the steel sheath" unless otherwise specified.

The chemical composition of the steel sheath consists of

C: from 0% to 0.650%,
Si: from 0.03% to 0.50%,
Mn: from 3.1% to 30.0%,
P: from 0% to 0.050%,
S: from 0% to 0.050%,
Cu: from 0% to 5.0%,
Ni: from 1.0% to 30.0%,

Cr: from 0% to 10.0%,
Mo: from 0% to 10.0%,
Nb: from 0% to 1.0%,
V: from 0% to 1.0%,
Co: from 0% to 1.0%,
Pb: from 0% to 1.0%,
Sn: from 0% to 1.0%,
Al: from 0% to 0.10%,
Ti: from 0% to 0.10%,
B: from 0% to 0.1000%,
N: from 0% to 0.500%,
O: from 0% to 0.0050%, and
balance: Fe and impurities,
wherein:

a total (Mn + Ni) of a content of the Mn and a content of the Ni satisfies formula: $Mn + Ni \geq 5.0\%$,
a total (Mn + Ni + Cr) of the content of the Mn, the content of the Ni, and a content of the Cr satisfies formula: $Mn + Ni + Cr \geq 15.0\%$, and
a fraction of fcc in the steel sheath as determined by a magnetic induction method is 70% or more.

(C: from 0% to 0.650%)

C is an element that generates spatters. For reducing spatters, the lower the C content of the sheath is, the more advantageous it is. C is also an interstitial solid solution strengthening element. When the C content of the sheath is excessive, the sheath becomes hard, and core wire processing becomes difficult. Spatters also increase.
Therefore, the C content of the sheath is set to from 0% to 0.650%.
However, in order to set the C content of the sheath to 0%, the costs for removing C increase. There is a concern that the C content of the wire is insufficient and the strength of the weld metal is insufficient. Therefore, when the C content of the sheath is low, the C content of the flux needs to be increased. Therefore, the lower limit of the C content of the sheath may be set to 0.003%, 0.005%, or 0.008%.
The upper limit of the C content in the sheath is preferably 0.600%, 0.500%, 0.400%, 0.300%, 0.200%, less than 0.200%, 0.190%, 0.180%, 0.150%, or 0.120%.

(Si: from 0.03% to 0.50%)

Si is a deoxidizing element. When the Si content of the sheath is too low, the P content of the sheath increases.
Si has low solid solubility relative to an austenite phase, and as the Si content becomes more increased, a brittle phase, such as an intermetallic compound and $\delta$ ferrite, is more likely to be generated at a high temperature, which deteriorates high-temperature ductility.
Therefore, the Si content of the sheath is set to from 0.03% to 0.50%.
The lower limit of the Si content of the sheath is preferably 0.04%, 0.05%, or 0.08%.
The upper limit of the Si content of the sheath is preferably less than 0.50%, 0.48%, 0.45%, 0.40%, 0.35%, 0.30%, or 0.20%.

(Mn: from 3.1% to 30.0%)

Mn is an element that causes an increase in the amount of fumes generated. For reducing the amount of fumes generated, the lower Mn content of the sheath is, the more advantageous it is. When Mn is excessively added, the stacking fault energy decreases and the toughness deteriorates.
Mn is an austenite stabilizing element. When the Mn content of the sheath is too low, the Mn content of the entire wire is insufficient, austenitization of the weld metal hardly proceeds, and the low-temperature toughness is deteriorated. It is necessary to excessively increase the Mn content of the flux in order to secure the low-temperature toughness of the weld metal.
Therefore, the Mn content of the sheath is set to from 3.1% to 30.0%.
The lower limit of the Mn content of the sheath is preferably 5.0%, more than 5.0%, 5.2%, more than 6.0%, 6.2%, 7.0%, more than 7.0%, 7.2%, more than 10.0%, or 10.2%.
The upper limit of the Mn content of the sheath is preferably 28.0%, 26.0%, 25.0%, 23.0%, 21.0%, 20.0%, 19.0%, 18.0%, 15.0%, or 12.0%.

(P: from 0% to 0.050%)

Since P is an impurity element and reduces the toughness of the weld metal, it is preferable to reduce the P content of the sheath as much as possible. Therefore, the lower limit of the P content of the sheath is set to 0%. However, from the viewpoint of reducing the costs for removing P, the P content of the sheath may be 0.003% or more.
When the P content of the sheath is 0.050% or less, an adverse effect of P on the toughness is within an acceptable range. In order to effectively suppress the decrease in toughness of the weld metal, the P content of the sheath is preferably 0.040% or less, 0.030% or less, 0.020% or less, 0.015% or less, or 0.010% or less.

(S: from 0% to 0.050%)

Since S is an impurity element and reduces the toughness of the weld metal, it is preferable to reduce the S content of the sheath as much as possible. Therefore, the lower limit of the S content of the sheath is set to 0%. However, from the viewpoint of reducing the costs for removing S, the S content of the sheath may be 0.003% or more.
When the S content of the sheath is 0.050% or less, an adverse effect of S on the toughness is within an acceptable range. In order to effectively suppress the decrease in toughness of the weld metal, the S content of the sheath is preferably 0.040% or less, 0.030% or less, 0.020% or less, 0.015% or less, or 0.010% or less.

(Cu: from 0% to 5.0%)

Cu is a precipitation strengthening element and may be contained in the sheath in order to improve the strength of the weld metal. When the Cu content of the sheath is excessive, the sheath becomes hard, and core wire processing becomes difficult.
Therefore, the Cu content of the sheath is set to from 0% to 5.0%.
The lower limit of the Cu content of the sheath is preferably 0.3%, 0.5%, or 0.7%.
The upper limit of the Cu content of the sheath is preferably 4.5%, 4.0%, or 3.5%.

(Ni: from 1.0% to 30.0%)

Ni is an austenite stabilizing element. When the Ni content of the sheath is too low, the Ni content of the entire wire is insufficient, austenitization of the weld metal hardly proceeds, and the low-temperature toughness is deteriorated. It is necessary to excessively increase the Ni content of the flux in order to secure the low-temperature toughness of the weld metal.
When the Ni content of the sheath is increased, the cost of the wire is increased.
Therefore, the Ni content of the sheath is set to from 1.0% to 30.0%.
The lower limit of the Ni content of the sheath is preferably 2.0%, 3.0%, 5.0%, more than 6.0%, 6.2%, 7.0%, more than 8.0%, or 8.2%.
The upper limit of the Ni content of the sheath is preferably 28.0%, 26.0%, 24.0%, 22.0%, 20.0%, 19.0%, 18.0%, 15.0%, or 12.0%.

(Cr: from 0% to 10.0%)

Cr is an austenite stabilizing element and may be contained in the sheath in order to improve the low-temperature toughness of the weld metal.
When the Cr content of the sheath is excessive, a martensite structure is formed in the steel sheath, and core wire processing becomes difficult.
Therefore, the Cr content of the sheath is set to from 0% to 10.0%.
The lower limit of the Cr content of the sheath is preferably 0.01%, 0.02%, 1.0%, 2.0%, or 3.0%.
The upper limit of the Cr content of the sheath is preferably 9.0%, 8.0%, less than 8.0%, 7.8%, 7.0%, less than 6.0%, or 5.8%.

(Mo: from 0% to 10.0%)

Mo is a precipitation strengthening element and may be contained in the sheath in order to improve the strength of the weld metal. When the Mo content of the sheath is excessive, the sheath becomes hard, and core wire processing becomes difficult.
Therefore, the Mo content of the sheath is set to from 0% to 10.0%.
The lower limit of the Mo content of the sheath is preferably 1.0%, 2.0%, or 3.0%.

The upper limit of the Mo content of the sheath is preferably 9.0%, 8.0%, or 7.0%.

(Nb: from 0% to 1.0%)

Nb is an element that forms a carbide in the weld metal and increases the sheath of the weld metal, and thus may be contained in the sheath.
When the Nb content of the sheath is excessive, the sheath becomes hard, and core wire processing becomes difficult.
Therefore, the Nb content of the sheath is set to from 0% to 1.0%.
The lower limit of the Nb content of the sheath is preferably 0.01%, 0.05%, 0.1%, 0.15%, or 0.2%.
The upper limit of the Nb content of the sheath is preferably 0.95%, 0.9%, 0.85%, or 0.8%.

(V: from 0% to 1.0%)

V is an element that forms a carbonitride in the weld metal and increases the sheath of the weld metal, and thus may be contained in the sheath.
When the V content of the sheath is excessive, the sheath becomes hard, and core wire processing becomes difficult.
Therefore, the V content of the sheath is set to from 0% to 1.0%.
The lower limit of the V content of the sheath is preferably 0.01%, 0.05%, 0.1%, 0.15%, or 0.2%.
The upper limit of the V content of the sheath is preferably 0.95%, 0.9%, 0.85%, or 0.8%.

(Co: from 0% to 1.0%)

Since Co is an element that increases the strength of the weld metal by solid solution strengthening, Co may be contained in the sheath.
When the Co content of the sheath is excessive, the sheath becomes hard, and core wire processing becomes difficult.
Therefore, the Co content of the sheath is set to from 0% to 1.0%.
The lower limit of the Co content of the sheath is preferably 0.01%, 0.05%, 0.1%, 0.15%, or 0.2%.
The upper limit of the Co content of the sheath is preferably 0.95%, 0.9%, 0.85%, or 0.8%.

(Pb: from 0% to 1.0%)

Since Pb has an effect of improving the machinability of the weld metal, Pb may be contained in the sheath.
When the Pb content of the sheath is excessive, an arc state is deteriorated to increase spatters.
Therefore, the Pb content of the sheath is set to from 0% to 1.0%.
The lower limit of the Pb content of the sheath is preferably 0.01%, 0.05%, 0.1%, 0.15%, or 0.2%.
The upper limit of the Pb content of the sheath is preferably 0.95%, 0.9%, 0.85%, or 0.8%.

(Sn: from 0% to 1.0%)

Since Sn is an element that improves the corrosion resistance of the weld metal, Sn may be contained in the sheath.
When the Sn content of the sheath is excessive, there is a concern that cracking may occur in the weld metal.
Therefore, the Sn content of the sheath is set to from 0% to 1.0%.
The lower limit of the Sn content of the sheath is preferably 0.01%, 0.05%, 0.1%, 0.15%, or 0.2%.
The upper limit of the Sn content of the sheath is preferably 0.95%, 0.9%, 0.85%, or 0.8%.

(Al: from 0% to 0.10%)

Al is a deoxidizing element and may be contained in the sheath in order to suppress welding defects and improve the cleanliness of the weld metal.
When the Al content of the sheath is excessive, coarse inclusions are generated in the steel sheath, and core wire processing becomes difficult.
Therefore, the Al content of the sheath is set to from 0% to 0.10%.
The lower limit of the Al content of the sheath is preferably 0.01%, 0.02%, or 0.03%.
The upper limit of the Al content of the sheath is preferably 0.09%, 0.08%, or 0.07%.

(Ti: from 0% to 0.10%)

Ti is a deoxidizing element and may be contained in the sheath in order to suppress welding defects and improve the cleanliness of the weld metal.

When the Ti content of the sheath is excessive, coarse inclusions are generated in the steel sheath, and core wire processing becomes difficult.

Therefore, the Ti content of the sheath is set to from 0% to 0.10%.

The lower limit of the Ti content of the sheath is preferably 0.003%, 0.01%, 0.02%, or 0.03%.

The upper limit of the Ti content of the sheath is preferably 0.09%, 0.08%, or 0.07%.

(B: from 0% to 0.1000%)

B is an austenite stabilizing element and is also an interstitial solid solution strengthening element, and may be contained in the sheath in order to improve the low-temperature toughness and strength of the weld metal.

When the B content of the sheath is excessive, the sheath becomes hard, and core wire processing becomes difficult. When the B content of the sheath is excessive, $M_{23}(C,B)_6$ precipitates, which causes toughness deterioration.

Therefore, the B content of the sheath is set to from 0% to 0.1000%.

The lower limit of the B content of the sheath is preferably 0.0005%, 0.0010%, or 0.0020%.

The upper limit of the B content of the sheath is preferably 0.0800%, 0.0500%, or 0.0100%.

(N: from 0% to 0.500%)

N is an austenite stabilizing element and is also an interstitial solid solution strengthening element, and may be contained in the sheath in order to improve the low-temperature toughness and strength of the weld metal.

When the N content of the sheath is excessive, the sheath becomes hard, and core wire processing becomes difficult. The occurrence of blowing also increases.

Therefore, the N content of the sheath is set to from 0% to 0.500%.

The lower limit of the N content of the sheath is preferably 0.001 %, 0.010%, or 0.050%.

The upper limit of the N content of the sheath is preferably 0.450%, 0.400%, or 0.350%.

(O: from 0% to 0.0050%)

O may be contained in the sheath as an impurity. However, when the O content is excessive, toughness and ductility in the weld metal are deteriorated, and thus the upper limit of the O content of the sheath is set to 0.0050% or less.

The upper limit of the O content of the sheath is preferably 0.0040% or 0.0030%.

From the viewpoint of suppressing an increase in manufacturing cost due to a decrease in the O content, the lower limit of the O content of the sheath is preferably 0.0003% or 0.0005%.

(Balance: Fe and Impurities)

Other remainder components in the chemical composition of the sheath are Fe and impurities.

The impurities mean raw materials such as minerals or scraps or components to be incorporated by various factors of a manufacturing process when the sheath is industrially manufactured, which are acceptable within a range not adversely affecting the characteristics of the wire.

(Total (Mn + Ni) of Mn Content and Ni Content)

Each of Mn and Ni is an austenite stabilizing element and improve the low-temperature toughness of the weld metal. Since Ni is an expensive metal, in order to improve the low-temperature toughness of the weld metal while suppressing the cost of the wire, the total (Mn + Ni) of the Mn content and the Ni content is set to 5.0% or more while each of the Mn content and the Ni content in the sheath satisfies the above range.

The total (Mn + Ni) of the Mn content and the Ni content in the sheath is preferably 7.0% or more, 10.0% or more, or 15.0% or more.

Mn is an element that causes an increase in the amount of fumes generated. When Mn is excessively added, the stacking fault energy decreases and the toughness deteriorates. Therefore, from the viewpoint of reducing the amount of fumes generated while suppressing the cost of the wire and improving the low-temperature toughness of the weld metal, the total (Mn + Ni) of the Mn content and the Ni content is preferably set to 37.0% or less while each of the Mn content and the Ni content in the sheath satisfies the above range.

The total (Mn + Ni) of the Mn content and the Ni content in the sheath is more preferably 35.0% or less, 32.0% or less, or 30.0% or less.

(Total (Mn + Ni + Cr) of Mn Content, Ni Content, and Cr Content)

Each of Mn, Ni, and Cr is an austenite stabilizing element and improve the low-temperature toughness of the weld metal. Since Ni is an expensive metal, in order to improve the low-temperature toughness of the weld metal while suppressing the cost of the wire, the total (Mn + Ni + Cr) of the Mn content, the Ni content, and the Cr content is set to 15.0% or more while each of the Mn content, the Ni content, and the Cr content in the sheath satisfies the above range.

The total (Mn + Ni + Cr) of the Mn content, the Ni content, and the Cr content in the sheath is preferably 17.0% or more, 19.0% or more, 20.0% or more, 22.0% or more, 24.0% or more, 26.0% or more, 28.0% or more, or 30.0% or more.

Mn is an element that causes an increase in the amount of fumes generated. When Mn is excessively added, the stacking fault energy decreases and the toughness deteriorates. Cr is an element that forms a martensite structure, and the formation of the martensite structure in the sheath affects the processability of the wire. Cr causes an increase in the amount of a low-melting-point compound in the molten metal. Therefore, from the viewpoint of reducing the amount of fumes generated while suppressing the cost of the wire and improving the low-temperature toughness of the weld metal, enhancing the processability of the wire, and reducing the amount of a low-melting-point compound generated in the molten metal, the total (Mn + Ni + Cr) of the Mn content, the Ni content, and the Cr content is preferably set to 47.0% or less while each of the Mn content, the Ni content, and the Cr content in the sheath satisfies the above range.

The total (Mn + Ni + Cr) of the Mn content, the Ni content, and the Cr content in the sheath is more preferably 45.0% or less, 42.0% or less, or 40.0% or less.

(Mass Ratio (Ni/Mn) of Mn Content and Ni Content)

Each of Mn and Ni is an austenite stabilizing element and improve the low-temperature toughness of the weld metal. Ni is an expensive metal, and Mn is an element that causes an increase in the amount of fumes generated. When Mn is excessively added, the stacking fault energy decreases and the toughness deteriorates. Ni improves the toughness by increasing the stacking fault energy.

Therefore, from the viewpoint of improving the low-temperature toughness of the weld metal and reducing the amount of fumes generated while suppressing the cost of the wire, the mass ratio (Ni/Mn) of the Mn content and the Ni content in the sheath is preferably 0.10 or more.

The lower limit of the mass ratio (Ni/Mn) of the Mn content and the Ni content in the sheath is more preferably 0.15, 0.20, 0.30, 0.50, 0.70, 1.00, 1.10, or 1.20.

The upper limit of the mass ratio (Ni/Mn) of the Mn content and the Ni content in the sheath is preferably 10.00, 8.00, or 5.00.

(Fraction of fcc Determined by Magnetic Induction Method)

In order to enhance the low-temperature toughness in the weld metal, it is preferable to increase the proportion of austenite in the structure of the core wire. Therefore, the fraction of fcc in the core wire is set to 70% or more. The fraction of fcc is preferably 80% or more or 90% or more, and may be 100%. The remainder of the structure is bcc.

The fraction of fcc in the structure of the core wire can be determined by the following method.

A sample is collected from the core wire, the fraction (%) of bcc on the sample surface is measured by a magnetic induction method using FERITSCOPE (registered trademark) FMP30 (manufactured by FISCHER INSTRUMENTS K.K.) and using a probe (FGAB 1.3-Fe) manufactured by FISCHER INSTRUMENTS K.K. as a probe of the measuring instrument, and the arithmetic average value of the measured fractions of bcc is determined. The fraction (%) of fcc in the structure of the core wire is determined using the obtained average value of the fractions of bcc by the following formula.

$$\text{Fraction of fcc} = 100 - \text{Fraction of bcc}$$

(Metal Component in Chemical Composition of Flux-Cored Wire)

Hereinafter, the metal component in a preferred chemical composition of the flux-cored wire according to the disclosure will be described.

In the description of the metal component of the flux-cored wire, "%" means "by mass% with respect to the total mass of the flux-cored wire" unless otherwise specified.

The metal component of the flux-cored wire may be contained in the steel sheath or may be contained in the flux.

In a case in which the flux-cored wire according to the disclosure has a plating layer on the outer surface of the steel sheath, the metal component may be contained in the plating layer.

The "metal component in the chemical composition" of the flux-cored wire means a component other than an oxide, a fluoride, a nitride, and a metal carbonate among components contained in the flux-cored wire. The oxide, the fluoride, the nitride, and the metal carbonate present in the steel sheath are not contained or the contents thereof are an extremely small amount, and therefore are not removed at the time of measurement. The "component other than an oxide, a fluoride, a nitride, and a metal carbonate" means that the oxide, the fluoride, the nitride, and the metal carbonate contained in the flux are excluded.

The metal component in the chemical composition of the flux-cored wire according to the disclosure preferably consists of

C: from 0.020% to 0.650%,
Si: from 0.20% to 0.80%,
Mn: from 1.5% to 30.%,
P: from 0% to 0.050%,
S: from 0% to 0.050%,
Cu: from 0% to 10.0%,
Ni: from 5.0% to 30.0%,
Cr: from 2.0% to 10.0%,
Mo: from 0% to 10.0%,
Nb: from 0% to 5.00%,
V: from 0% to 5.0%,
Co: from 0% to 1.0%,
Pb: from 0% to 1.0%,
Sn: from 0% to 1.0%,
W: from 0% to 10.0%,
Mg: from 0% to 1.00%,
Al: from 0% to 3.000%,
Ca: from 0% to 0.100%,
Ti: from 0% to 3.000%,
B: from 0% to 0.1000%,
REM: from 0% to 0.100%,
Bi: from 0% to 0.050%,
N: from 0% to 1.000%,
O: from 0% to 0.020%, and
balance: Fe and impurities.

That is, in the flux-cored wire according to the disclosure, the component is a content of a component other than an oxide, a fluoride, a nitride, and a metal carbonate.

(C: from 0.020% to 0.650%)

C is an element that improves the strength of the weld metal, and is an element for securing the strength of the weld metal.

By reducing the C content of the wire, it is possible to suppress the influence of deterioration of toughness due to an increase in strength of the weld metal, and to secure the low-temperature toughness of the weld metal.

Therefore, the C content of the wire is preferably set to 0.020% to 0.650%.

The lower limit of the C content of the wire is more preferably 0.050%, 0.100%, or 0.200%.

The upper limit of the C content of the wire is more preferably 0.600%, 0.550%, 0.500%, 0.450%, 0.400%, or 0.350%.

(Si: from 0.20% to 0.80%)

Si improves the cleanliness of the weld metal and suppresses the occurrence of welding defects such as blow holes.

By reducing the Si content of the wire, in welding of Ni steel and Ni-based alloy steel, micro-segregation in the weld metal can be suppressed, and embrittlement in the segregation part can be suppressed.

Therefore, the Si content of the wire is preferably set to 0.20% to 0.80%.

The lower limit of the Si content of the wire is more preferably 0.25%, 0.30%, or 0.35%.

The upper limit of the Si content of the wire is more preferably 0.75%, 0.70%, or 0.65%.

(Mn: from 1.5% to 30.0%)

Mn is an austenite stabilizing element. By increasing the Mn content of the wire, austenitization of the weld metal can be caused to proceed, and the low-temperature toughness can be secured. It is not necessary to excessively increase the content of Mn to be added to the steel sheath in order to secure the low-temperature toughness of the weld metal.

Mn is an element that functions as a deoxidizing agent to improve the cleanliness of the weld metal. Mn is an element that detoxifies S in the weld metal by forming MnS and improves the low-temperature toughness of the weld metal. Mn also has an effect of preventing hot cracking.

By reducing the Mn content of the wire, in welding of Ni steel and Ni-based alloy steel, micro-segregation in the weld metal can be suppressed, and embrittlement in the segregation part can be suppressed.

Therefore, the Mn content of the wire is preferably set to 1.5% to 30.0%.

The lower limit of the Mn content of the wire is more preferably 2.0%, 5.0%, 7.0%, or 9.0%.

The upper limit of the Mn content of the wire is more preferably 28.0%, 25.0%, 22.0%, or 20.0%.

(P: from 0% to 0.050%)

Since P is an impurity element and reduces the toughness of the weld metal, it is preferable to reduce the P content of the wire as much as possible. Therefore, the lower limit of the P content of the wire is set to 0%. However, from the viewpoint of reducing the costs for removing P, the P content may be 0.003% or more.

When the P content of the wire is 0.050% or less, an adverse effect of P on the toughness can be suppressed.

Therefore, the P content of the wire is preferably set to 0% to 0.050%.

In order to effectively suppress the decrease in toughness of the weld metal, the P content of the wire is more preferably 0.040% or less, 0.030% or less, 0.020% or less, 0.015% or less, or 0.010% or less.

(S: from 0% to 0.050%)

Since S is an impurity element and reduces the toughness of the weld metal, it is preferable to reduce the S content of the wire as much as possible. Therefore, the lower limit of the S content of the wire is set to 0%. However, from the viewpoint of reducing the costs for removing S, the S content of the wire may be 0.003% or more.

When the S content of the wire is 0.050% or less, an adverse effect of S on the toughness can be suppressed.

Therefore, the S content of the wire is preferably set to 0% to 0.050%.

In order to effectively suppress the decrease in toughness of the weld metal, the S content of the wire is more preferably 0.040% or less, 0.030% or less, 0.020% or less, 0.015% or less, or 0.010% or less.

(Cu: from 0% to 10.0%)

Cu is a precipitation strengthening element and may be contained in the wire in order to improve the strength of the weld metal. Cu is an austenite stabilizing element and may be contained in the wire in order to improve the low-temperature toughness of the weld metal.

When the Cu content of the wire is excessive, the above effect is saturated.

Therefore, the Cu content of the wire is preferably set to 0% to 10.0%.

The lower limit of the Cu content of the wire is more preferably 0.5%, 0.7%, or 1.0%.

The upper limit of the Cu content of the wire is more preferably 9.5%, 9.0%, or 8.0%.

(Ni: from 5.0% to 30.0%)

Ni is an austenite stabilizing element. By increasing the Ni content of the wire, austenitization of the weld metal can be caused to proceed, and the low-temperature toughness can be secured. It is not necessary to excessively increase the content of the Ni to be added to the steel sheath in order to secure the low-temperature toughness of the weld metal.

By reducing the Ni content of the wire, the cost of the wire can be reduced.

Therefore, the Ni content of the wire is preferably set to 5.0% to 30.0%.

The lower limit of the Ni content of the wire is more preferably 7.0%, 10.0%, or 12.0%.

The upper limit of the Ni content of the wire is more preferably 28.0%, 25.0%, 23.0%, 20.0%, 19.0%, 18.0%, or 17.0%.

(Cr: from 2.0% to 10.0%)

Cr is an austenite stabilizing element. By increasing the Cr content of the wire, austenitization of the weld metal can be caused to proceed, and the low-temperature toughness can be secured. It is not necessary to excessively increase the content of the Ni to be added to the steel sheath in order to secure the low-temperature toughness of the weld metal.

By reducing the Cr content of the wire, the amount of a low-melting-point compound in the molten metal can be reduced, and the solid-liquid coexisting temperature range of the molten metal is narrowed, so that the occurrence of hot cracking can be suppressed.

Therefore, the Cr content of the wire is preferably set to 2.0% to 10.0%.

The lower limit of the Cr content of the wire is more preferably 2.5%, 3.0%, or 3.5%.

The upper limit of the Cr content of the wire is more preferably 9.5%, 9.0%, or 8.0%.

(Mo: from 0% to 10.0%)

Mo is a solid-solution strengthening element and a precipitation strengthening element and may be contained in the wire in order to improve the strength of the weld metal.

By reducing the Mo content of the wire, an excessive increase in strength of the weld metal can be suppressed, and the low-temperature toughness can be secured.

Therefore, the Mo content of the wire is preferably set to 0% to 10.0%.

The lower limit of the Mo content of the wire is more preferably 2.0%, 2.5%, 3.0%, or 3.5%.

The upper limit of the Mo content of the wire is more preferably 9.8%, 9.5%, 9.0%, or 8.0%.

(Nb: from 0% to 5.00%)

Nb is an element that forms a carbide in the weld metal and increases the sheath of the weld metal, and thus may be contained in the wire.

By reducing the Nb content of the wire, the occurrence of hot cracking of the weld metal can be suppressed.

Therefore, the Nb content of the wire is preferably set to 0% to 5.00%.

The lower limit of the Nb content of the wire is more preferably 0.50%, 1.00%, or 1.50%.

The upper limit of the Nb content of the wire is more preferably 4.50%, 4.00%, or 3.50%.

(V: from 0% to 5.0%)

V is an element that forms a carbonitride in the weld metal and increases the sheath of the weld metal, and thus may be contained in the wire.

By reducing the V content of the wire, the occurrence of hot cracking of the weld metal can be suppressed.

Therefore, the V content of the wire is preferably set to 0% to 5.0%.

The lower limit of the V content of the wire is more preferably 0.5%, 1.0%, or 1.5%.

The upper limit of the V content of the wire is more preferably 4.5%, 4.0%, or 3.5%.

(Co: from 0% to 1.0%)

Since Co is an element that increases the strength of the weld metal by solid solution strengthening, Co may be contained in the wire.

By reducing the Co content of the wire, a decrease in ductility of the weld metal can be suppressed, and the toughness can be secured.

Therefore, the Co content of the wire is preferably set to 0% to 1.0%.

The lower limit of the Co content of the wire is more preferably 0.01%, 0.05%, 0.1%, 0.15%, or 0.2%.

The upper limit of the Co content of the wire is more preferably 0.8%, 0.7%, 0.6%, or 0.3%.

(Pb: from 0% to 1.0%)

Since Pb has an effect of improving the machinability of the weld metal, Pb may be contained in the wire.

By reducing the Pb content of the wire, the arc state can be favorably maintained, and the occurrence of spatters can be suppressed.

Therefore, the Pb content of the wire is preferably set to 0% to 1.0%.

The lower limit of the Pb content of the wire is more preferably 0.01%, 0.05%, 0.1%, 0.15%, or 0.2%.

The upper limit of the Pb content of the wire is more preferably 0.9%, 0.8%, 0.7%, 0.6%, or 0.3%.

(Sn: from 0% to 1.0%)

Since Sn is an element that improves the corrosion resistance of the weld metal, Sn may be contained in the wire.

By reducing the Sn content of the wire, the occurrence of cracking in the weld metal can be suppressed.

Therefore, the Sn content of the wire is preferably set to 0% to 1.0%.

The lower limit of the Sn content of the wire is more preferably 0.01%, 0.05%, 0.1%, 0.15%, or 0.2%.

The upper limit of the Sn content of the wire is more preferably 0.8%, 0.7%, 0.6%, or 0.3%.

(W: from 0% to 10.0%)

W is a solid-solution strengthening element and may be contained in the wire in order to improve the strength of the weld metal.

By reducing the W content of the wire, an excessive increase in strength of the weld metal can be suppressed, and the toughness can be secured.

Therefore, the W content of the wire is preferably set to 0% to 10.0%.

The lower limit of the W content of the wire is more preferably 0.5%, 1.0%, or 2.0%.

The upper limit of the W content of the wire is more preferably 9.0%, 8.0%, 7.0%, or 6.0%.

(Mg: from 0% to 1.00%)

Since Mg is a deoxidizing element and is effective in reducing oxygen of the weld metal and improving the toughness of the weld metal, Mg may be contained in the wire.

By reducing the Mg content of the wire, the arc can be stabilized, spatters and blow holes can be reduced, and welding workability can be secured.

Therefore, the Mg content of the wire is preferably set to 0% to 1.00%.

The lower limit of the Mg content of the wire is more preferably 0.02%, 0.05%, 0.10%, or 0.20%.

The upper limit of the Mg content of the wire is more preferably 0.90%, 0.80%, or 0.70%.

(Al: from 0% to 3.000%)

Since Al is a deoxidizing element and is effective in suppressing the occurrence of welding defects such as blow holes, improving the cleanliness of the weld metal, and the like, Al may be contained in the wire.

By reducing the Al content of the wire, it is possible to reduce formation of a nitride or an oxide in the weld metal by Al, and to secure the low-temperature toughness of the weld metal.

Therefore, the Al content of the wire is preferably set to 0% to 3.000%.

The lower limit of the Al content of the wire is more preferably 0.005%, 0.010%, 0.020%, or 0.050%.

The upper limit of the Al content of the wire is more preferably 2.500%, 2.000%, or 1.500%.

(Ca: from 0% to 0.100%)

Since Ca has a function of changing the structure of a sulfide in the weld metal and refining the sizes of a sulfide and an oxide in the weld metal, Ca is effective in improving the ductility and toughness of the weld metal. Therefore, Ca may be contained in the wire.

By reducing the Ca content of the wire, coarsening of a sulfide and an oxide can be suppressed, and the low-temperature toughness of the weld metal can be secured. Weldability can be secured by suppressing deterioration of a weld bead shape and stabilizing an arc.

Therefore, the Ca content of the wire is preferably set to 0% to 0.100%.

The lower limit of the Ca content of the wire is more preferably 0.010%, 0.020%, or 0.030%.

The upper limit of the Ca content of the wire is more preferably 0.095%, 0.090%, or 0.085%.

(Ti: from 0% to 3.000%)

Since Ti is a deoxidizing element and is effective in suppressing the occurrence of welding defects such as blow holes, improving the cleanliness, and the like, Ti may be contained in the wire.

By reducing the Ti content of the wire, the generation of a carbide in the weld metal can be suppressed, and the toughness of the weld metal can be secured.

Therefore, the Ti content of the wire is preferably set to 0% to 3.000%.

The lower limit of the Ti content of the wire is more preferably 0.020%, 0.050%, or 0.100%.

The upper limit of the Ti content of the wire is more preferably 2.500%, 2.000%, or 1.500%.

(B: from 0% to 0.1000%)

Since B has an effect of strengthening the crystal grain boundary of the weld metal and further increasing the tensile strength of the weld metal, B may be contained in the wire.

By reducing the B content of the wire, the amount of B in the weld metal can also be reduced, the formation of a B compound such as coarse BN or $Fe_{23}(C,B)_6$ is suppressed, and the low-temperature toughness of the weld metal can be secured.

Therefore, the B content of the wire is preferably set to 0% to 0.1000%.

The lower limit of the B content of the wire is more preferably 0.0010%, 0.0020%, or 0.0030%.

The upper limit of the B content of the wire is more preferably 0.0900%, 0.0700%, or 0.0500%.

(REM: from 0% to 0.100%)

Since REM is an element that stabilizes an arc, REM may be contained in the wire.

By reducing the REM content of the wire, the occurrence of spatters can be reduced, and welding workability can be secured.

Therefore, the REM content of the wire is preferably set to 0% to 0.100%.

The lower limit of the REM content of the wire is more preferably 0.001%, 0.002%, or 0.005%.

The upper limit of the REM content of the wire is more preferably 0.090%, 0.080%, or 0.070%.

"REM" represents total 17 elements including Sc, Y, and a lanthanoid, and the "REM content" means the total content of these 17 elements. In a case in which a lanthanoid is used as REM, REM is industrially contained in a form of a misch metal.

(Bi: from 0% to 0.050%)

Since Bi is an element that improves the peelability of slag, Bi may be contained in the wire.

By reducing the Bi content of the wire, the occurrence of solidification cracking of the weld metal can be suppressed.

Therefore, the Bi content of the wire is preferably set to 0% to 0.050%.

The lower limit of the Bi content of the wire is more preferably 0.005%, 0.010%, or 0.020%.

The upper limit of the Bi content of the wire is more preferably 0.048%, 0.045%, 0.040%, or 0.035%.

(N: from 0% to 1.000%)

N is an austenite stabilizing element and is also an interstitial solid solution strengthening element. N is an element that also has a smaller adverse effect on toughness of the weld metal due to an increase in strength of the weld metal than that of C. By increasing the N content of the wire, austenitization of the weld metal can be caused to proceed, and the low-temperature toughness of the weld metal can be secured. The strength of the weld metal is also increased.

By reducing the N content of the wire, the occurrence of blowing can be reduced, and the occurrence of welding defects can be suppressed.

Therefore, the N content of the wire is preferably set to 0% to 1.000%.

The lower limit of the N content in the wire is more preferably 0.005%, 0.007%, 0.010%, 0.015%, 0.020%, 0.030%, 0.050%, 0.070%, 0.100%, or 0.150%.

The upper limit of the N content of the wire is more preferably 0.950%, 0.900%, or 0.850%.

(O: from 0% to 0.020%)

O may be contained in the metal component of the wire as an impurity. However, when the O content is excessive, toughness and ductility in the weld metal are deteriorated, and thus the upper limit of the O content of the wire is set to 0.020% or less.

The upper limit of the O content of the wire is preferably 0.015%, 0.010%, or 0.005%.

From the viewpoint of suppressing an increase in manufacturing cost due to a decrease in the O content, the lower limit of the O content of the wire is preferably 0.0005%, 0.001%, or 0.002%.

The O content described here refers to the amount of oxygen contained in the metal component of the wire, and means, for example, the amount of oxygen contained as an oxide film of alloy powder or the like. Therefore, oxygen contained in the wire as an oxide is excluded.

(Balance: Fe and Impurities)

Other remainder components in the metal component of the wire are Fe and impurities.

The balance Fe is, for example, Fe contained in the steel sheath, Fe (for example, iron powder) in the alloy powder contained in the flux, or the like.

The impurities mean components derived from raw materials or components to be incorporated by various factors of a manufacturing process when the wire is industrially manufactured, which are acceptable within a range not adversely affecting the wire.

(Mass Ratio (Ni/Mn) of Mn Content and Ni Content)

Each of Mn and Ni is an austenite stabilizing element and improve the low-temperature toughness of the weld metal. Ni is an expensive metal, and Mn is an element that causes an increase in the amount of fumes generated. When Mn is excessively added, the stacking fault energy decreases and the toughness deteriorates. Ni improves the toughness by increasing the stacking fault energy.

Therefore, from the viewpoint of improving the low-temperature toughness of the weld metal and reducing the amount of fumes generated while suppressing the cost of the wire, the mass ratio (Ni/Mn) of the Mn content and the Ni content in the wire is preferably 0.200 or more.

The lower limit of the mass ratio (Mn/Ni) of the Mn content and the Ni content in the wire is more preferably 0.300, 0.400, 0.500, 0.600, 0.700, or 1.000.

The upper limit of the mass ratio (Ni/Mn) of the Mn content and the Ni content in the wire is more preferably 10.000, 8.000, or 5.000.

[Oxide, Fluoride, and so on in Chemical Composition of Flux-Cored Wire]

Next, the oxide, the fluoride, and the like in the chemical composition of the flux-cored wire according to the disclosure will be described.

In the description of the oxide, the fluoride, and the like of the flux-cored wire, "%" means "by mass% with respect to the total mass of the flux-cored wire" unless otherwise specified.

The oxide, the fluoride, the nitride, and the metal carbonate present in the steel sheath are not contained or the contents thereof are an extremely small amount. Therefore, in the present specification, the contents of the oxide, the fluoride, the nitride, and the metal carbonate mean the contents of the oxide, the fluoride, the nitride, and the metal carbonate contained in the flux.

(Total of $TiO_2$-Equivalent Values of Ti Oxide: from 3.00% to 8.00% by Mass%)

The Ti oxide increases the amount of oxygen in the weld metal and affects the low-temperature toughness.

The Ti oxide is a slag component and has an action of uniformly encapsulating the entire bead with the slag. The Ti oxide has an effect of stabilizing the duration of the arc and reducing the amount of spatters generated. Therefore, when the Ti oxide is contained, welding workability (particularly, vertical weldability) is improved.

When the total of $TiO_2$-equivalent values of the Ti oxide is 3.00% or more, the slag is appropriately generated and the bead can be uniformly encapsulated, so that it is possible to suppress the defect of the bead appearance due to baking of the slag on the bead surface. When the total of $TiO_2$-equivalent values of the Ti oxide is 3.00% or more, the arc is stabilized, and the amount of spatters generated can be reduced. Welding workability (particularly, vertical weldability) can be secured.

When the total of $TiO_2$-equivalent values of the Ti oxide is 8.00% or less, the amount of oxygen in the weld metal can be suppressed, and the low-temperature toughness can be secured. When the total of $TiO_2$-equivalent values of the Ti oxide is 8.00% or less, an increase in viscosity of the slag can be suppressed, and thus, it is possible to suppress the slag from becoming too thick, and to suppress a shape in which the toe of the bead is expanded. When the total of $TiO_2$-equivalent values of the Ti oxide is 8.00% or less, the formation of pits can be suppressed. The occurrence of slag entrainment can be suppressed.

Therefore, the total of $TiO_2$-equivalent values of the Ti oxide is preferably set to from 3.00% to 8.00%.

The lower limit of the total of $TiO_2$-equivalent values of the Ti oxide is more preferably 3.50%, 4.00%, or 4.50%.

The upper limit of the total of $TiO_2$-equivalent values of the Ti oxide is more preferably 7.50%, 7.00%, or 6.50%.

The Ti oxide may mainly exist as rutile, titanium oxide, titanium slag, ilmenite, sodium titanate, potassium titanate, or the like in the flux. Therefore, mainly by controlling the content of the Ti oxide in the flux, the content of the Ti oxide can be adjusted to the above range.

The total of $TiO_2$-equivalent values of the Ti oxide is the mass percentage of $TiO_2$ with respect to the total mass of the wire in a case in which all the Ti oxides (for example, TiO, $TiO_2$, $Ti_2O_3$, $Ti_3O_5$, and the like are used, and the Ti oxides are added as rutile, titanium oxide, titanium slag, ilmenite, sodium titanate, potassium titanate, or the like) contained in the wire are converted into $TiO_2$.

The total of $TiO_2$-equivalent values of the Ti oxide is determined by analyzing the mass of Ti existing as an oxide in the wire using a fluorescent X-ray analyzer and an X-ray diffraction (XRD) apparatus. The amount of Ti existing as an oxide in the wire and the amount of Ti contained as a metal component can be determined separately by analyzing components contained in the flux by fluorescent X-ray analysis and then analyzing the molecular structure of the components contained by X-ray diffraction (XRD).

Specifically, first, a flux is collected from the wire, and the flux is analyzed by the above method. For example, in a case in which $TiO_2$, $Ti_2O_3$, and $Ti_3O_5$ are detected by analysis, the mass percentages of the Ti oxides are represented as $[TiO_2]$, $[Ti_2O_3]$, and $[Ti_3O_5]$, respectively, and the total of $TiO_2$-equivalent values of the Ti oxide is represented as [converted $TiO_2$], which is calculated by the following Formula 1.

$$[\text{Converted TiO}_2] = (0.60 \times [\text{TiO}_2] + 0.67 \times [\text{Ti}_2\text{O}_3] + 0.64 \times [\text{Ti}_3\text{O}_5]) \times 1.67 \dots \text{Formula 1}$$

The coefficients (0.60, 0.67, and 0.64) in Formula 1 are coefficients for calculating the amount of Ti contained in each oxide, and the multiplier (1.67) at the end is a multiplier for calculating a $TiO_2$-equivalent value from the total amount of Ti existing as an oxide in the wire.

A method of determining the coefficient will be described. When an oxide of $M_xO_y$ (example; $TiO_2$, $Ti_2O_3$, or $Ti_3O_5$) is detected, a coefficient relating to $M_xO_y$ is calculated by the following Formula 2.

[Atomic weight of element M] $\times$ x/([Atomic weight of element M] $\times$ x + [Atomic weight of oxygen] $\times$ y)        Formula 2

0.60, 0.67, and 0.64 in Formula 1 correspond to the coefficients determined by the above Formula 2.

A method of determining the multiplier for calculating an equivalent value will be described. The multiplier for conversion into $M_aO_b$ (example; $TiO_2$) is calculated by the following Formula 3.

([Atomic weight of element M] $\times$ a + [Atomic weight of oxygen] $\times$ b)/([Atomic weight of element M] $\times$ a)        Formula 3

1.67 in Formula 1 corresponds to the multiplier determined by the above Formula 3.

The oxide may be considered to be a compound bonded to two kinds of metal elements. In this case, as a method of determining a coefficient, in a case in which $M_xO_yM^2_z$ (example; $TiO_3 \cdot Fe$, that is, an oxide of M = Ti, $M^2$ = Fe, x = 1, y = 3, and z = 1) is detected, the coefficient is calculated by the following Formula 4.

[Atomic weight of element M] $\times$ x/([Atomic weight of element M] $\times$ x + [Atomic weight of oxygen] $\times$ y + [Atomic weight of element $M^2$] $\times$ z)        Formula 4

The total of $SiO_2$-equivalent values of the Si oxide, the total of $ZrO_2$-equivalent values of the Zr oxide, the total of $Al_2O_3$-equivalent values of the Al oxide, the total of MgO-equivalent values of the Mg oxide, the total of $Na_2O$-equivalent values of the Na oxide, the total of $K_2O$-equivalent values of the K oxide, the total of CaO-equivalent values of the Ca oxide, the total of MnOz-equivalent values of the Mn oxide, and the total of FeO-equivalent values of the Fe oxide can also be obtained by calculation similar to the total of the $TiO_2$-equivalent values of the Ti oxide. That is, the flux collected by a fluorescent X-ray analyzer and an X-ray diffraction (XRD) apparatus is analyzed, coefficients and multipliers are calculated according to the detected various oxides in accordance with the above Formulae 2, 3, and 4, and calculation is performed in the similar manner as in the above Formula 1.

Representative oxides detected by analysis are listed below.

Si oxide; SiO, $SiO_2$, $Si_2O_3$, and $Si_2O_4$
Zr oxide; $ZrO_2$
Al oxide; AlO, $Al_2O_3$, and $Al_3O_5$
Mg oxide; MgO, $MgO_2$, and $Mg_2O$
Na oxide; $Na_2O$ and $Na_2O_2$
K oxide; $K_2O$ and $KO_2$
Ca oxide; CaO and $CaO_2$
Mn oxide; MnO, $Mn_2O$, and $MnO_2$

Fe oxide; FeO, Fe$_2$O$_4$, and FeO$_3$

In the analysis of various compositions such as Ti oxide, a method of separating the steel sheath and the flux is as follows. The steel sheath of the flux-cored wire is opened using a nipper or the like, and the flux inside the flux-cored wire is collected. In the steel sheath, the flux adhering to the inner surface of the sheath, which is a contact portion with the flux, is removed using a wire brush, ultrasonic cleaning, or the like. As a result, the steel sheath and the flux are separated.

(Total of SiO$_2$-Equivalent Values of Si Oxide: from 0% to 1.00% by Mass%)

The Si oxide increases the amount of oxygen in the weld metal and deteriorates the low-temperature toughness. Therefore, from the viewpoint of the low-temperature toughness, it is preferable not to contain a Si oxide, and the lower limit of the total of SiOz-equivalent values of the Si oxide is set to 0%.
However, since the Si oxide is a slag component and has an action of increasing the viscosity of molten slag and improving slag removability, the Si oxide may be contained from such a viewpoint.
When the total of SiO$_2$-equivalent values of the Si oxide is 0.10% or more, the slag encapsulation state is further improved, the slag removability is enhanced, and the bead shape and the bead appearance can be further improved. Welding workability (particularly, vertical weldability) can be secured.
When the total of SiO$_2$-equivalent values of the Si oxide is 1.00% or less, the amount of oxygen in the weld metal can be suppressed, and the low-temperature toughness can be secured. When the total of SiO$_2$-equivalent values of the Si oxide is 1.00% or less, the amount of spatters generated can be suppressed. When the total of SiO$_2$-equivalent values of the Si oxide is 1.00% or less, the formation of pits, gas grooves, and the like can be suppressed. The occurrence of slag entrainment can be suppressed.
Therefore, the total of SiO$_2$-equivalent values of the Si oxide is preferably set to from 0% to 1.00%.
The lower limit of the total of SiO$_2$-equivalent values of the Si oxide is more preferably 0.05%, 0.10%, 0.15%, 0.20%, or 0.25%.
The upper limit of the total of SiO$_2$-equivalent values of the Si oxide is more preferably 0.95%, 0.90%, or 0.85%.
The Si oxide may mainly exist as silica sand, zircon sand, feldspar, sodium silicate, potassium silicate, or the like in the flux. Therefore, mainly by controlling the content of the Si oxide in the flux, the content of the Si oxide can be adjusted to the above range.

(Total of ZrO$_2$-Equivalent Values of Zr Oxide: from 0% to 0.80% by Mass%)

The Zr oxide increases the amount of oxygen in the weld metal and deteriorates the low-temperature toughness. Therefore, from the viewpoint of the low-temperature toughness, it is preferable not to contain a Zr oxide, and the lower limit of the total of ZrOz-equivalent values of the Zr oxide is set to 0%.
However, since the Zr oxide is a slag component and has an action of enhancing slag encapsulation in horizontal fillet welding to smooth the bead shape, the Zr oxide may be contained from such a viewpoint.
When the total of ZrO$_2$-equivalent values of the Zr oxide is 0.80% or less, it is possible to suppress the bead shape from being convex. The occurrence of slag entrainment can be suppressed.
Therefore, the total of ZrO$_2$-equivalent values of the Zr oxide is preferably set to from 0% to 0.80%.
The upper limit of the total of ZrO$_2$-equivalent values of the Zr oxide is more preferably 0.60%, 0.40%, 0.20%, or 0.10%.
The Zr oxide may mainly exist as zircon sand, zirconium oxide, or the like in the flux, and may be contained in a trace amount in the Ti oxide. Therefore, mainly by controlling the content of the Zr oxide in the flux, the content of the Zr oxide can be adjusted to the above range.

(Total of Al$_2$O$_3$-Equivalent Values of Al Oxide: from 0% to 0.80% by Mass%)

Since the Al oxide serves as an oxygen source, when the Al oxide is added, the amount of oxygen in the weld metal, which causes toughness deterioration. Therefore, from the viewpoint of the low-temperature toughness, it is preferable not to contain an Al oxide, and the lower limit of the total of Al$_2$O$_3$-equivalent values of the Al oxide is set to 0%.
However, in a case in which the molten slag is formed, the Al oxide has an action of preventing undercut on the upper leg side of the fillet bead by improving slag encapsulation, and thus may be contained from such a viewpoint.
When the total of Al$_2$O$_3$-equivalent values of the Al oxide is 0.80% or less, the bead shape in which the toe of the bead on the lower leg side of the fillet bead is expanded can be suppressed. The occurrence of slag entrainment can be suppressed.
Therefore, the total of Al$_2$O$_3$-equivalent values of the Al oxide is preferably set to from 0% to 0.80%.
The upper limit of the total of Al$_2$O$_3$-equivalent values of the Al oxide is more preferably 0.70%, 0.60%, 0.40%, 0.20%, or 0.10%.

The Al oxide may mainly exist as a component such as alumina or feldspar in the flux in many cases. Therefore, mainly by controlling the content of the Al oxide in the flux, the content of the Al oxide can be adjusted to the above range.

(Total of Fluorides: from 0.10% to 2.00% by Mass%)

$K_2SiF_6$, $K_2ZrF_6$, NaF, $Na_3AlF_6$, $CaF_2$, and $MgF_2$ (hereinafter, these fluorides are referred to as "specific fluorides" in some cases) have an effect of reducing the amount of oxygen in the weld metal.

When the total of the specific fluorides is 0.10% or more, the amount of oxygen in the weld metal is not excessively increased, and the low-temperature toughness can be secured.

When the total of the specific fluorides is 2.00% or less, the generation of welding fumes can be reduced, and the occurrence of welding defects can be suppressed.

Therefore, it is preferable that one or more fluorides of the specific fluorides are contained, and the total thereof is set to from 0.10% to 2.00%.

The lower limit of the total of the specific fluorides is more preferably 0.20%, 0.30%, or 0.40%.

The upper limit of the total of the specific fluorides is more preferably 1.90%, 1.80%, or 1.70%.

The content of each fluoride is measured by fluorescent X-ray analysis and X-ray diffraction (XRD) similarly to the content of the Ti oxide described above.

(Total ofNa-Containing Compounds: from 0.01% to 2.00% by Mass%)

The Na oxide, NaF, and $Na_3AlF_6$ (hereinafter, these Na-containing compounds are referred to as "specific Na-containing compounds" in some cases) are decomposed during welding, Na acts as a deoxidizing agent to reduce the amount of oxygen in the weld metal. Thereby, the low-temperature toughness of the weld metal is improved.

When the total of the specific Na-containing compounds is 0.01% or more, an action of reducing the amount of oxygen in the weld metal can be obtained, and the low-temperature toughness can be secured.

When the total of the specific Na-containing compounds is 2.00% or less, the lowering of the solidification temperature of the welding slag can be suppressed, and welding workability (particularly, vertical weldability) can be secured.

Therefore, it is preferable that one or more Na-containing compounds of the specific Na-containing compounds are contained, and the total thereof is set to from 0.01% to 2.00%.

The lower limit of the total of the specific Na-containing compounds is more preferably 0.05%, 0.15%, 0.20%, or 0.30%.

The upper limit of the total of the specific Na-containing compounds is more preferably 1.90%, 1.80%, 1.70%, or 1.50%.

The content of the Na content means the total of $Na_2O$-equivalent values of the Na oxide.

(Total of K-Containing Compounds: from 0.01% to 2.00% by Mass%)

The K oxide, $K_2SiF_6$, and $K_2ZrF_6$ (hereinafter, these K-containing compounds are referred to as "specific K-containing compounds" in some cases) are decomposed during welding, decomposed K acts as a deoxidizing agent to reduce the amount of oxygen in the weld metal. Thereby, the low-temperature toughness of the weld metal is improved.

When the total of the specific K-containing compounds is 0.01% or more, an action of reducing the amount of oxygen in the weld metal can be obtained, and the low-temperature toughness can be secured.

When the total of the specific K-containing compounds is 2.00 or less, the lowering of the solidification temperature of the welding slag can be suppressed, and welding workability (particularly, vertical weldability) can be secured.

Therefore, it is preferable that one or more K-containing compounds of the specific K-containing compounds are contained, and the total thereof is set to from 0.01% to 2.00%.

The lower limit of the total of the specific K-containing compounds is more preferably 0.05%, 0.20%, 0.30%, or 0.40%.

The upper limit of the total of the specific K-containing compounds is more preferably 1.95%, 1.90%, 1.80%, or 1.50%.

The content of the K content means the total of $K_2O$-equivalent values of the K oxide.

(Total of Mg-Containing Compounds: from 0.01% to 2.00% by Mass%)

The flux-cored wire according to the present embodiment may contain any one or more Mg-containing compounds of a Mg oxide and $MgF_2$ in addition to the specific Na-containing compounds and the specific K-containing compounds.

The Mg oxide and $MgF_2$ (hereinafter, these Mg-containing compounds are referred to as "specific Mg-containing compounds" in some cases) are decomposed during welding, Mg acts as a deoxidizing agent to reduce the amount of oxygen in the weld metal. Thereby, the low-temperature toughness of the weld metal is improved.

When the total of the specific Mg-containing compounds is 0.01% or more, an action of reducing the amount of oxygen in the weld metal is increased, and the low-temperature toughness is further improved.

When the total of the specific Mg-containing compounds is 2.00% or less, the solidification temperature of the welding slag is increased, and welding workability (particularly, vertical weldability) is further improved.

Therefore, the content of any one or more Mg-containing compounds among the specific Mg-containing compounds is preferably set to from 0% to 2.00% in total, and in a case in which the Mg-containing compounds are contained, the total content thereof is preferably set to from 0.01% to 2.00%.

The lower limit of the total of the specific Mg-containing compounds is more preferably 0.20%, 0.30%, or 0.40%.

The upper limit of the total of the specific Mg-containing compounds is more preferably 1.90%, 1.80%, or 1.70%.

The content of the Mg content means the total of MgO-equivalent values of the Mg oxide.

(Other Meanings of Containing Specific Na-Containing Compound and Specific K-Containing Compound in Wire)

When the specific Na-containing compound and the specific K-containing compound are contained instead of $CaF_2$ containing Ca functioning as a deoxidizing agent, the occurrence of spatters can be suppressed, and welding workability can be secured. When the specific Na-containing compound and the specific K-containing compound are contained instead of the metal Mg functioning as a deoxidizing agent, the diffusible hydrogen amount in the weld metal can be reduced, and the low-temperature cracking resistance can be secured.

Therefore, in order to obtain a weld metal excellent in welding workability (particularly, vertical weldability) and also excellent in low-temperature toughness and low-temperature cracking resistance, it is preferable to contain the specific Na-containing compound and the specific K-containing compound in each of the above ranges in the wire.

From the same viewpoint, it is also preferable that the wire contains the specific Mg-containing compound in the above range.

The contents of the specific Mg-containing compound, the specific Na-containing compound, and the specific K-containing compound are contents represented by mass% with respect to the total mass of the flux-cored wire.

(X Value as Calculated by Formula A)

In the flux-cored wire according to the disclosure, an X value as calculated by the following Formula A is preferably from 0.10 to 160.00.

$$X = (8 \times CaF_2 + 5 \times MgF_2 + 5 \times NaF + 5 \times K_2SiF_6 + 5 \times K_2ZrF_6 + Na_3AlF_6)/(SiO_2 + Al_2O_3 + ZrO_2 + 0.5 \times MgO + CaO + 0.5 \times Na_2O + 0.5 \times K_2O + MnO_2 + FeO) \qquad \text{Formula A}$$

wherein, $CaF_2$, $MgF_2$, NaF, $K_2SiF_6$, $K_2ZrF_6$, and $Na_3AlF_6$ each indicate, by mass% with respect to a total mass of the flux-cored wire, a content of a compound represented by each chemical formula; $SiO_2$ represents a total of $SiO_2$-equivalent values of a Si oxide, $Al_2O_3$ represents a total of $Al_2O_3$-equivalent values of an Al oxide, $ZrO_2$ represents a total of $ZrO_2$-equivalent values of a Zr oxide, MgO represents a total of MgO-equivalent values of a Mg oxide, CaO represents a total of CaO-equivalent values of a Ca oxide, $Na_2O$ represents a total of $Na_2O$-equivalent values of a Na oxide, $K_2O$ represents a total of $K_2O$-equivalent values of a K oxide, $MnO_2$ represents a total of $MnO_2$-equivalent values of a Mn oxide, and FeO represents a total of FeO-equivalent values of a Fe oxide; and wherein the $SiO_2$-equivalent values, the $Al_2O_3$-equivalent values, the $ZrO_2$-equivalent values, the MgO-equivalent values, the CaO-equivalent values, the $Na_2O$-equivalent values, the $K_2O$-equivalent values, the $MnO_2$-equivalent values, and the FeO-equivalent values in Formula A are represented by mass% with respect to the total mass of the flux-cored wire.

In Formula A, the molecule is an index of the amount of a compound containing a component (Ca, Mg, Na, K, or Si) that is decomposed during welding, functions as a deoxidizing agent, and reduces the amount of oxygen in the weld metal, and fluorine that reduces the diffusible hydrogen amount in the weld metal.

The denominator is an index of the amount of a compound containing oxygen (O) that increases the amount of oxygen in the weld metal.

That is, when the X value is 0.10 or more, the amount of the compound containing oxygen (O) that increases the amount of oxygen in the weld metal is small, the oxygen amount reducing action of the weld metal is increased, and the low-temperature toughness is further improved.

When the X value is 160.00 or less, the amount of fluoride is not too large, slag entrainment hardly occurs, and a sound joint can be easily produced.

The X value as calculated by Formula A is preferably set to from 0.10 to 160.00.

The lower limit of the X value is more preferably 1.00, 5.00, or 10.00.

The upper limit of the X value is more preferably 130.00, 100.00, 70.00, 50.00, or 20.00.

- Total Content of Other Oxides: from 0% to 10.00% -

In the flux-cored wire according to the disclosure, in a case in which one or two or more oxides selected from the group consisting of a Fe oxide, a Mg oxide, a Na oxide, a K oxide, a Mn oxide, and a Ca oxide are contained as oxides other than the Ti oxide, the Si oxide, the Zr oxide, and the Al oxide, the total content thereof is preferably 10.00% or less. The oxides included in the group consisting of a Fe oxide, a Mg oxide, a Na oxide, a K oxide, a Mn oxide, and a Ca oxide may be simply abbreviated as "other oxides". The total value of the contents of the respective oxides in the other oxides may be simply abbreviated as "total content of the other oxides".

In a case in which the flux-cored wire according to the disclosure contains one or two or more oxides of the other oxides, the total content of the other oxides is determined as the total of FeO-equivalent values of the Fe oxide, MgO-equivalent values of the Mg oxide, $Na_2O$-equivalent values of the Na oxide, $K_2O$-equivalent values of the K oxide, $MnO_2$-equivalent values of the Mn oxide, and CaO-equivalent values of the Ca oxide.

In the flux-cored wire according to the disclosure, other oxides are not essential components, and thus the lower limit value of the total content of the other oxides in the flux-cored wire is 0%.

The other oxides have an effect of maintaining a favorable weld bead shape and an effect of improving vertical weldability. The Mg oxide, the Fe oxide, and the like also have an effect of stabilizing the arc. In order to obtain such an effect, the total content of the other oxides may be more than 0%. In order to further exhibit these effects, the lower limit of the total content of the other oxides may be set to 0.05%, 0.10%, 0.15%, or 0.20%. When the total content of the other oxides is 10.00% or less, the occurrence of entrainment of slag is suppressed, and a sound joint can be easily produced. Therefore, the upper limit value of the total content of the other oxides is preferably set to 10.00%, and may be set to 9.00%, 8.00%, 7.00%, 6.00%, 3.00%, 2.00%, 1.00%, 0.50%, or 0.30%.

The content of the other oxides in the flux-cored wire according to the disclosure does not need to be limited for each type of oxide.

The contents of the respective oxides in the other oxides and the total content of the other oxides are measured by fluorescent X-ray analysis and X-ray diffraction (XRD) similarly to the content of the Ti oxide described above.

(Nitride and Metal Carbonate)

The nitride (particularly, the nitride in the flux) has a function of reducing the diffusible hydrogen amount in the weld metal to remarkably improve the low-temperature cracking resistance of the weld metal. The reason for this is not clear, but it is presumed that one of the reasons is that N in the nitride is bonded to hydrogen (H) during welding to become ammonia ($NH_3$), and this $NH_3$ is released to the outside of the weld metal.

Therefore, the flux-cored wire according to the disclosure may contain a nitride.

The flux-cored wire according to the disclosure may contain, for example, one or two or more selected from the group consisting of AlN, BN, $Ca_3N_2$, CeN, CrN, $Cu_3N$, $Fe_4N$, $Fe_3N$, $Fe_2N$, $Mg_3N$, $Mo_2N$, NbN, $Si_3N_4$, TiN, VN, ZrN, $Mn_2N$, and $Mn_4N$, as a nitride.

The metal carbonate is ionized by an arc to generate $CO_2$ gas. The $CO_2$ gas lowers the hydrogen partial pressure in a welding atmosphere and reduces the diffusible hydrogen amount in the weld metal.

Therefore, the flux-cored wire according to the disclosure may contain a metal carbonate in the flux.

The flux-cored wire according to the disclosure may contain, for example, one or two or more selected from the group consisting of $MgCO_3$, $Na_2CO_3$, $LiCO_3$, $CaCO_3$, $K_2CO_3$, $BaCO_3$, $FeCO_3$, $MnCO_3$, and $SrCO_3$, as a metal carbonate.

However, the type and composition of the metal carbonate are not limited.

The contents of the nitride and the metal carbonate are measured by fluorescent X-ray analysis and X-ray diffraction (XRD) similarly to the content of the Ti oxide described above.

The flux-cored wire according to the disclosure may further include a lubricant applied to the wire surface. The lubricant applied to the wire surface has an effect of improving wire feeding performance during welding. As a lubricant for a welding wire, various kinds of lubricants (for example, vegetable oil such as palm oil) can be used, but in order to suppress low-temperature cracking of the weld metal, it is preferable to use one or both of polytetrafluoroethylene oil (PTFE oil) or perfluoropolyether oil (PFPE oil) not containing H. As described above, the flux-cored wire according to the disclosure may further include plating formed on the wire surface. In this case, the lubricant is applied to the surface of the plating.

The amount of hydrogen contained in the flux-cored wire according to the disclosure is not particularly limited, but is preferably 12 ppm or less with respect to the total mass of the flux-cored wire in order to reduce the diffusible hydrogen amount in the weld metal. The amount of hydrogen in the flux-cored wire may increase due to entry of moisture into the flux-cored wire during storage of the flux-cored wire. Therefore, in a case in which a period from wire manufacturing to wire use is long, it is desirable to prevent entry of moisture by means described later.

(Wire Shape)

The shape (wire structure) of the flux-cored wire according to the disclosure will be described.

Usually, the flux-cored wire is distinguished into either a wire having a shape (seamless shape) with no slit-like gap because the seam of the steel sheath is welded (a wire having a welded part at the seam of the steel sheath), or a wire having a shape (seam shape) with a slit-like gap because the seam of the steel sheath is not welded (a shape having no welded part at the seam of the steel sheath).

In the flux-cored wire according to the disclosure, any shape can be adopted. However, in order to suppress the occurrence of low-temperature cracking of the weld metal, it is preferable that there is no slit-like gap in the steel sheath. H (hydrogen) entering the welded part during welding diffuses into the weld metal and a material to be welded, accumulates in a stress concentration part, and causes low-temperature cracking. Although there are various sources of H, in a case in which welding is performed in a state where cleanliness of a welded part and conditions of gas shielding are strictly managed, moisture ($H_2O$) contained in a wire becomes a main source of H, and this moisture amount strongly affects the diffusible hydrogen amount of the welded joint.

In a case in which the steel sheath has a seam, moisture in the atmosphere easily enters the flux through the seam. For this reason, it is desirable to suppress the entry of moisture in the atmosphere into the flux through the steel sheath during the period from the manufacture of the wire to the use of the wire by removing the seam of the steel sheath. In a case in which the steel sheath has a seam and the period from the manufacture of the wire to the use of the wire is long, it is desirable to vacuum-package the entire flux-cored wire or store the flux-cored wire in a container capable of holding the flux-cored wire in a dried state, in order to prevent the entry of a supply source of H such as moisture.

(Wire Diameter)

The diameter of the flux-cored wire according to the disclosure is not particularly limited, and is, for example, from φ1.0 mm to φ2.0 mm. The diameter of a general flux-cored wire is from φ1.2 mm to φ1.6 mm.

(Filling Rate)

A filling rate of the flux-cored wire according to the disclosure is not particularly limited as long as the above-described conditions are satisfied. In view of the filling rate of a general flux-cored wire, the lower limit value of the filling rate of the flux-cored wire according to the disclosure may be set to, for example, 8%, 10%, or 12%. The upper limit value of the filling rate of the flux-cored wire according to the disclosure may be set to, for example, 28%, 25%, 22%, 20%, or 17%.

When the filling rate is calculated, the mass of the steel sheath and the mass of the flux are separately measured.

<Method of Manufacturing Flux-Cored Wire>

A method of manufacturing a flux-cored wire according to the disclosure will be described.
the manufacturing method described below is an example, and the method of manufacturing a flux-cored wire according to the disclosure is not limited to the following method.

(Case of Flux-Cored Wire Having Seamless Shape)

A method of manufacturing a flux-cored wire having a seamless shape includes a step of preparing a flux, a step of molding a steel strip using a molding roll while feeding the steel strip in a longitudinal direction to obtain a U-shaped open tube, a step of supplying the flux into the open tube through an opening of the open tube, a step of butt-welding facing edge portions (both ends in a circumferential direction) of the opening of the open tube to obtain a seamless tube, a step of performing wire drawing of the seamless tube to obtain a flux-cored wire having a predetermined wire diameter, and a step of annealing the flux-cored wire during or after completion of the wire drawing step.

The flux is prepared so that each component of the flux-cored wire falls within the predetermined range described above. It should be noted that the filling rate of the flux determined by the width and thickness of the steel strip, which is a material for the steel sheath, the filling amount of the flux, and the like also affects the amount of each component of the flux-cored wire.

The butt-welding is performed by electric resistance welding, laser welding, TIG welding, or the like.

The flux-cored wire is annealed in order to remove moisture in the flux-cored wire during the wire drawing step or after completion of the wire drawing step. In order to set the H content of the flux-cored wire to 12 ppm or less, the annealing temperature is preferably set to 650°C or higher, and the annealing time is preferably set to 4 hours or longer. In order to prevent the denaturation of the flux, the annealing temperature is preferably set to 900°C or lower.

When a cross-section of a flux-cored wire having no slit-like gap and subjected to butt seam welding is polished and etched, a welding mark is observed, but when the cross-section thereof is not etched, a welding mark is not observed. Therefore, as described above, such a wire is referred to as a seamless wire in some cases. For example, in "New Edition, Introduction of Technology of Welding and Joining" (2008) published by Japan Welding Society, Sanpo Publications Incorporated, p. 111, the flux-cored wire having no slit-like gap is described as a seamless-type wire. Even when the gap of the steel sheath of the flux-cored wire is brazed, a flux-cored wire having no slit-like gap can be obtained.

(Case of Flux-Cored Wire Having Slit-Like Gap)

A method of manufacturing a flux-cored wire having a flux-cored wire having a slit-like gap is the same as the method of manufacturing a flux-cored wire having a seamless shape except that the method includes a step of forming an open tube and butting an end of the open tube to obtain a tube having a slit-like gap instead of the step of butt-welding both ends in a circumferential direction of the open tube to obtain a seamless tube. The method of manufacturing a flux-cored wire having a flux-cored wire having a slit-like gap may further include a step of caulking the butted end of the open tube.

In the method of manufacturing a flux-cored wire having a flux-cored wire having a slit-like gap, a tube having a slit-like gap is subjected to wire drawing.

<Method of Manufacturing Welded Joint>

A method of manufacturing a welded joint (welding method) according to the disclosure will be described.

The method of manufacturing a welded joint according to the disclosure includes a step of welding a steel material by using the flux-cored wire according to the disclosure described above.

A welded joint manufactured by the method of manufacturing a welded joint according to the disclosure has a high strength and high toughness. A welded structure having the welded joint manufactured by the method of manufacturing a welded joint according to the disclosure also has a high strength and high toughness in the welded joint.

In the method of manufacturing a welded joint according to the disclosure, gas shield arc welding is suitable as a welding method.

In the method of manufacturing a welded joint according to the disclosure, the type of steel material (a material to be welded) as a base material of the welded joint is not particularly limited, but examples thereof include a steel material having $P_{CM}$ (composition sensitive to weld cracking) of 0.24% or more and having high low-temperature crack susceptibility (particularly, a high-strength steel plate having a tensile strength of from 590 MPa to 1700 MPa and a plate thickness of 20 mm or more), and a Ni-based low temperature steel plate having a plate thickness of 20 mm or more and containing from 6% to 9% of Ni, and among these, a Ni-based low temperature steel plate having a plate thickness of 20 mm or more and containing from 6% to 9% of Ni can be suitably used.

The method of manufacturing a welded joint according to the disclosure may include a step of welding a steel material by using the flux-cored wire according to the disclosure in any one or more of a first pass to the last pass. In a case in which the welding is performed only in a single pass, the flux-cored wire according to the disclosure is used in the single pass.

The polarity of the flux-cored wire may be either positive or negative because the influence on the diffusible hydrogen amount of the weld metal and the amount of spatters generated is negligibly small, but the polarity is preferably positive.

The type of shielding gas used in the method of manufacturing a welded joint according to the disclosure is not particularly limited. In the method of manufacturing a welded joint according to the disclosure, regardless of the type of shielding gas, a welded joint exhibiting excellent welding workability and having a high strength and high toughness can be obtained. As the shielding gas in the method of manufacturing a welded joint according to the disclosure, 100 vol% of carbon dioxide gas, which is generally frequently used, mixed gas of Ar and from 3 vol% to 30 vol% of $CO_2$, and the like can be preferably used. The shielding gas during welding using the flux-cored wire according to the disclosure may contain 5 vol% or less of $O_2$ gas. Since these gases are inexpensive, welding using these gases is advantageous for industrial use.

Usually, when these gases are used in combination with a rutile-based flux-cored wire, a large amount of spatters is generated to deteriorate welding workability. However, since the method of manufacturing a welded joint according to the disclosure uses the flux-cored wire according to the disclosure capable of sufficiently suppressing the amount of spatters, favorable welding workability can be exhibited even in a case in which these gases are shielding gases.

The welding posture in the method of manufacturing a welded joint according to the disclosure is not particularly limited. The method of manufacturing a welded joint according to the disclosure can exhibit favorable welding workability (particularly, vertical weldability) regardless of whether the welding posture is a downward posture, a lateral posture, an upright posture, or an upward posture.

A welded joint obtained by the method of manufacturing a welded joint according to the disclosure includes a steel material as a base material and a welded part including a weld metal and a weld heat affected zone. The welded joint according to the disclosure is manufactured by using the flux-cored wire according to the disclosure, and includes a weld metal having a favorable bead shape. Therefore, a welded structure having the welded joint manufactured by the method of manufacturing a welded joint according to the disclosure also includes a weld metal having a favorable bead shape. The tensile strength of the resulting weld metal is preferably high, for example, from 590 MPa to 1200 MPa.

Examples

The feasibility and effects of the disclosure will be described in more detail with reference to the disclosure examples and comparative examples, but the following examples do not limit the disclosure, and any design change dedicated to the gist of the preceding and following description is included in the technical scope of the disclosure.

(Manufacturing of Flux-Cored Wire)

The flux-cored wires of examples of the disclosure and comparative examples were manufactured by the method described below.

First, a steel strip having the chemical composition of the sheath shown in Tables 1-A and 1-B was molded using a molding roll while being fed in the longitudinal direction to obtain a U-shaped open tube. The flux was supplied into the open tube through an opening of the open tube, and facing edge portions of the opening of the open tube were butt-welded to obtain a seamless tube.

This seamless tube was subjected to wire drawing to obtain a flux-cored wire having no slit-like gap. However, some of the samples were tubes having a slit-like gap, which were not seam-welded, and were subjected to wire drawing.

In this way, a flux-cored wire having a final wire diameter of φ1.2 mm was trial-produced.

During the wire drawing operation of these flux-cored wires, the flux-cored wires were annealed in a temperature range of from 650°C to 950°C for 4 hours or longer. After trial production, a lubricant was applied to the wire surface. The configurations of these flux-cored wires are shown in Tables 2-A to 2-F.

The units of the content of the chemical component of the sheath, the content of the alloy component of the wire, the content of the oxide, the content of the fluoride, the content of the Na-containing compound, the content of the K-containing compound, and the content of the iron powder shown in Tables 1-A, 1-B, and 2-A to 2-F are mass% with respect to the total mass of the flux-cored wire. In the table, "Mass% with respect to total mass of steel sheath" and "Mass% with respect to total mass of flux-cored wire" were both abbreviated as "mass%", and "Metal component in chemical composition of wire" was abbreviated as "Chemical component of wire".

[Table 1-A]

| Wire No. | Classification | Chemical component (mass%) of sheath | | | | | | | | | | | |
| --- | --- | --- | --- | --- | --- | --- | --- | --- | --- | --- | --- | --- | --- |
| | | C | Si | Mn | P | S | Cu | Ni | Cr | Mo | Nb | V | Co |
| 1 | Example of disclosure | 0.050 | 0.15 | 20.0 | 0.010 | 0.005 | | 4.0 | | | | | 0.1 |
| 2 | Example of disclosure | 0.050 | 0.15 | 7.0 | 0.010 | 0.005 | | 10.0 | 7.0 | 3.0 | | | |
| 3 | Example of disclosure | 0.050 | 0.15 | 20.0 | 0.010 | 0.005 | | 3.0 | | | | | |
| 4 | Example of disclosure | 0.050 | 0.15 | 10.0 | 0.010 | 0.005 | | 10.0 | | | 0.1 | | |
| 5 | Example of disclosure | 0.003 | 0.13 | 8.0 | 0.005 | 0.008 | | 8.0 | | | | | |
| 6 | Example of disclosure | 0.011 | 0.05 | 11.0 | 0.011 | 0.010 | | 2.0 | 3.0 | | | | |
| 7 | Example of disclosure | 0.187 | 0.09 | 17.0 | 0.014 | 0.010 | | 7.9 | | 5.0 | | | |
| 8 | Example of disclosure | 0.050 | 0.05 | 10.0 | 0.015 | 0.005 | | 13.0 | 7.0 | 3.0 | | | |
| 9 | Example of disclosure | 0.195 | 0.19 | 14.0 | 0.011 | 0.010 | | 10.0 | | 10.0 | | | |
| 10 | Example of disclosure | 0.136 | 0.12 | 10.0 | 0.023 | 0.026 | | 11.0 | | 8.0 | | | |
| 11 | Example of disclosure | 0.187 | 0.09 | 13.0 | 0.014 | 0.010 | | 13.0 | | 5.0 | | | |
| 12 | Example of disclosure | 0.150 | 0.09 | 19.0 | 0.023 | 0.025 | | 13.0 | 4.0 | 5.0 | | | |
| 13 | Example of disclosure | 0.120 | 0.12 | 19.0 | 0.016 | 0.019 | 3.0 | 17.0 | 4.0 | 5.0 | | | |
| 14 | Example of disclosure | 0.106 | 0.20 | 13.0 | 0.012 | 0.012 | 5.0 | 15.0 | 9.0 | 4.0 | | | |

(continued)

| Wire No. | Classification | Chemical component (mass%) of sheath | | | | | | | | | | | |
|---|---|---|---|---|---|---|---|---|---|---|---|---|---|
| | | C | Si | Mn | P | S | Cu | Ni | Cr | Mo | Nb | V | Co |
| 15 | Example of disclosure | 0.073 | 0.13 | 10.0 | 0.030 | 0.015 | | 11.0 | 1.0 | 6.0 | | | |
| 16 | Example of disclosure | 0.183 | 0.13 | 20.0 | 0.015 | 0.006 | | 17.0 | | 10.0 | | | |
| 17 | Example of disclosure | 0.124 | 0.08 | 19.0 | 0.011 | 0.016 | 4.0 | 15.0 | | 7.0 | | | |
| 18 | Example of disclosure | 0.100 | 0.05 | 16.0 | 0.024 | 0.026 | | 20.0 | | 1.0 | | | |
| 19 | Example of disclosure | 0.179 | 0.04 | 19.0 | 0.020 | 0.020 | | 15.0 | | 7.0 | | | |
| 20 | Example of disclosure | 0.115 | 0.05 | 17.0 | 0.022 | 0.029 | 2.0 | 13.0 | 3.0 | 9.0 | | | |
| 21 | Example of disclosure | 0.084 | 0.03 | 19.0 | 0.015 | 0.013 | 4.0 | 17.0 | 6.0 | 9.0 | | | |
| 22 | Example of disclosure | 0.188 | 0.05 | 11.0 | 0.025 | 0.008 | 3.0 | 18.0 | 5.0 | 9.0 | | | |
| 23 | Example of disclosure | 0.088 | 0.05 | 18.0 | 0.012 | 0.028 | | 15.0 | 9.0 | 5.0 | | 0.5 | |
| 24 | Example of disclosure | 0.194 | 0.03 | 16.0 | 0.005 | 0.029 | | 16.0 | 5.0 | 1.0 | | | |
| 25 | Example of disclosure | 0.108 | 0.05 | 24.0 | 0.024 | 0.027 | | 18.0 | 6.0 | 3.0 | | | |
| 26 | Example of disclosure | 0.090 | 0.04 | 11.0 | 0.008 | 0.020 | 3.0 | 14.0 | 10.0 | 7.0 | | | |
| 27 | Example of disclosure | 0.198 | 0.03 | 20.0 | 0.027 | 0.005 | 5.0 | 12.0 | 8.0 | 2.0 | | | |
| 28 | Example of disclosure | 0.144 | 0.04 | 15.0 | 0.015 | 0.013 | 2.0 | 20.0 | 3.0 | 3.0 | | | |
| 29 | Example of disclosure | 0.050 | 0.15 | 7.0 | 0.015 | 0.005 | | 10.0 | 7.0 | 3.0 | | | 0.1 |
| 30 | Example of disclosure | 0.400 | 0.13 | 16.0 | 0.015 | 0.006 | | 17.0 | 2.0 | 3.0 | | | |
| 31 | Example of disclosure | 0.300 | 0.05 | 7.0 | 0.024 | 0.026 | | 20.0 | | 1.0 | | | |
| 32 | Example of disclosure | 0.500 | 0.15 | 7.0 | 0.015 | 0.005 | | 10.0 | 7.0 | 3.0 | | | |
| 33 | Example of disclosure | 0.630 | 0.19 | 14.0 | 0.011 | 0.010 | | 10.0 | | | | | |
| 34 | Example of disclosure | 0.050 | 0.05 | 4.0 | 0.015 | 0.005 | | 2.0 | 9.0 | 3.0 | | | |
| 35 | Example of disclosure | 0.198 | 0.12 | 28.0 | 0.027 | 0.005 | | 4.0 | | | | | |
| 36 | Example of disclosure | 0.091 | 0.12 | 4.0 | 0.027 | 0.005 | | 29.0 | | | | | |
| 37 | Example of disclosure | 0.200 | 0.20 | 3.5 | 0.007 | 0.008 | | 15.0 | 5.0 | 5.0 | | | |
| A1 | Comparative Example | 0.090 | 0.04 | **0.1** | 0.008 | 0.020 | 3.0 | 14.0 | | | | | |
| A2 | Comparative Example | 0.198 | 0.03 | 20.0 | 0.027 | 0.005 | 5.0 | | | 2.0 | | | |
| A3 | Comparative Example | 0.090 | 0.04 | **1.0** | 0.008 | 0.020 | 3.0 | 1.0 | | | | | |
| A4 | Comparative Example | 0.084 | 0.03 | **0.5** | 0.015 | 0.013 | 4.0 | 17.0 | 6.0 | 9.0 | | | |
| A5 | Comparative Example | 0.400 | 0.03 | 4.0 | 0.014 | 0.027 | | 5.0 | 4.0 | | | | |
| A6 | Comparative Example | 0.144 | 0.04 | **35.0** | 0.015 | 0.013 | 2.0 | 1.0 | 3.0 | 3.0 | | | |

[Table 1-B]

| Wire No. | Classification | Chemical component (mass%) of sheath | | | | | | | Mn + Ni | Mn + Ni + Cr | Ni/Mn | Fraction (%) of fcc |
|---|---|---|---|---|---|---|---|---|---|---|---|---|
| | | Pb | Sn | Al | Ti | B | N | O | | | | |
| 1 | Example of disclosure | | | | | | 0.010 | 0.0027 | 24.0 | 24.0 | 0.20 | 100 |
| 2 | Example of disclosure | | | | | | 0.005 | 0.0030 | 17.0 | 24.0 | 1.43 | 98 |

(continued)

| Wire No. | Classification | Chemical component (mass%) of sheath | | | | | | | | | Ni/Mn | Fraction (%) of fcc |
|---|---|---|---|---|---|---|---|---|---|---|---|---|
| | | Pb | Sn | Al | Ti | B | N | O | Mn + Ni | Mn + Ni + Cr | | |
| 3 | Example of disclosure | | | | | | 0.010 | 0.0012 | 23.0 | 23.0 | 0.15 | 98 |
| 4 | Example of disclosure | | | | | | 0.005 | 0.0022 | 20.0 | 20.0 | 1.00 | 98 |
| 5 | Example of disclosure | | | | | | 0.002 | 0.0019 | 16.0 | 16.0 | 1.00 | 98 |
| 6 | Example of disclosure | | | | 0.06 | 0.1000 | 0.090 | 0.0022 | 13.0 | 16.0 | 0.18 | 98 |
| 7 | Example of disclosure | | | 0.01 | | | 0.207 | 0.0029 | 24.9 | 24.9 | 0.46 | 98 |
| 8 | Example of disclosure | | | | | | 0.015 | 0.0011 | 23.0 | 30.0 | 1.30 | 100 |
| 9 | Example of disclosure | | | | 0.09 | | 0.465 | 0.0023 | 24.0 | 24.0 | 0.71 | 100 |
| 10 | Example of disclosure | | 0.5 | 0.03 | 0.08 | | 0.081 | 0.0010 | 21.0 | 21.0 | 1.10 | 99 |
| 11 | Example of disclosure | 0.2 | | 0.01 | | | 0.207 | 0.0020 | 26.0 | 26.0 | 1.00 | 100 |
| 12 | Example of disclosure | | | 0.08 | 0.01 | | 0.004 | 0.0015 | 32.0 | 36.0 | 0.68 | 99 |
| 13 | Example of disclosure | | | 0.09 | | | 0.044 | 0.0018 | 36.0 | 40.0 | 0.89 | 98 |
| 14 | Example of disclosure | | | | | | 0.002 | 0.0021 | 28.0 | 37.0 | 1.15 | 99 |
| 15 | Example of disclosure | | | | | | 0.014 | 0.0013 | 21.0 | 22.0 | 1.10 | 99 |
| 16 | Example of disclosure | | | | | | 0.003 | 0.0029 | 37.0 | 37.0 | 0.85 | 98 |
| 17 | Example of disclosure | | | | | | 0.003 | 0.0014 | 34.0 | 34.0 | 0.79 | 100 |
| 18 | Example of disclosure | | | 0.06 | | | 0.003 | 0.0027 | 36.0 | 36.0 | 1.25 | 100 |
| 19 | Example of disclosure | | | | | | 0.003 | 0.0013 | 34.0 | 34.0 | 0.79 | 100 |
| 20 | Example of disclosure | | | | | | 0.002 | 0.0029 | 30.0 | 33.0 | 0.76 | 98 |
| 21 | Example of disclosure | | | | | | 0.360 | 0.0018 | 36.0 | 42.0 | 0.89 | 100 |
| 22 | Example of disclosure | | | 0.03 | | | 0.003 | 0.0017 | 29.0 | 34.0 | 1.64 | 98 |
| 23 | Example of disclosure | | | 0.07 | 0.04 | | 0.001 | 0.0025 | 33.0 | 42.0 | 0.83 | 100 |

(continued)

| Wire No. | Classification | Chemical component (mass%) of sheath | | | | | | | | | | Fraction (%) of fcc |
|---|---|---|---|---|---|---|---|---|---|---|---|---|
| | | Pb | Sn | Al | Ti | B | N | O | Mn + Ni | Mn + Ni + Cr | Ni/Mn | |
| 24 | Example of disclosure | | | 0.02 | 0.04 | | 0.003 | 0.0017 | 32.0 | 37.0 | 1.00 | 98 |
| 25 | Example of disclosure | | | 0.01 | | | 0.354 | 0.0028 | 42.0 | 48.0 | 0.75 | 100 |
| 26 | Example of disclosure | | | 0.05 | | | 0.174 | 0.0023 | 25.0 | 35.0 | 1.27 | 98 |
| 27 | Example of disclosure | | | 0.04 | | 0.0010 | 0.406 | 0.0027 | 32.0 | 40.0 | 0.60 | 99 |
| 28 | Example of disclosure | | | 0.04 | 0.02 | 0.0020 | 0.130 | 0.0013 | 35.0 | 38.0 | 1.33 | 98 |
| 29 | Example of disclosure | | | | | | 0.010 | 0.0019 | 17.0 | 24.0 | 1.43 | 98 |
| 30 | Example of disclosure | | | | | | 0.003 | 0.0022 | 33.0 | 35.0 | 1.06 | 99 |
| 31 | Example of disclosure | | | 0.06 | | | 0.003 | 0.0026 | 27.0 | 27.0 | 2.86 | 100 |
| 32 | Example of disclosure | | | | | 0.0010 | 0.010 | 0.0010 | 17.0 | 24.0 | 1.43 | 100 |
| 33 | Example of disclosure | | | | | | 0.465 | 0.0035 | 24.0 | 24.0 | 0.71 | 100 |
| 34 | Example of disclosure | | | | | | 0.015 | 0.0029 | 6.0 | 15.0 | 0.50 | 99 |
| 35 | Example of disclosure | | | | | | 0.406 | 0.0014 | 32.0 | 40.0 | 0.14 | 98 |
| 36 | Example of disclosure | | | | | | 0.406 | 0.0047 | 32.0 | 40.0 | 7.25 | 98 |
| 37 | Example of disclosure | | | | | | 0.040 | 0.0027 | 15.5 | 20.5 | 3.43 | 72 |
| A1 | Comparative Example | | | | | | 0.174 | 0.0044 | 14.1 | **14.1** | 140.00 | **3** |
| A2 | Comparative Example | | | | | | 0.406 | 0.0027 | 20.0 | 20.0 | - | 78 |
| A3 | Comparative Example | | | | | | 0.174 | 0.0009 | **2.0** | **2.0** | 1.00 | **0** |
| A4 | Comparative Example | | | | | | 0.360 | 0.0041 | 17.5 | 23.5 | 34.00 | 80 |
| A5 | Comparative Example | | | | | | 0.015 | 0.0043 | 9.0 | **13.0** | 1.25 | 75 |
| A6 | Comparative Example | | | | | | 0.130 | 0.0024 | 36.0 | 39.0 | 0.03 | 100 |

[Table 2-A]

| Wire No. | Classification | Wire structure | Chemical component (mass%) of wire | | | | | | |
|---|---|---|---|---|---|---|---|---|---|
| | | | C | Si | Mn | P | S | Cu | Ni |
| 1 | Example of disclosure | Having slit-like gap | 0.500 | 0.45 | 25.0 | 0.010 | 0.008 | | 4.0 |
| 2 | Example of disclosure | Having slit-like gap | 0.450 | 0.35 | 15.0 | 0.010 | 0.008 | | 16.0 |
| 3 | Example of disclosure | Having slit-like gap | 0.400 | 0.45 | 28.0 | 0.010 | 0.008 | | 4.0 |
| 4 | Example of disclosure | Having slit-like gap | 0.350 | 0.45 | 13.0 | 0.010 | 0.008 | | 18.5 |
| 5 | Example of disclosure | Having slit-like gap | 0.250 | 0.45 | 9.5 | 0.005 | 0.018 | | 18.5 |
| 6 | Example of disclosure | Having slit-like gap | 0.180 | 0.35 | 13.0 | 0.012 | 0.009 | | 10.0 |
| 7 | Example of disclosure | Having slit-like gap | 0.206 | 0.48 | 28.0 | 0.011 | 0.008 | | 7.5 |
| 8 | Example of disclosure | Having slit-like gap | 0.148 | 0.41 | 10.4 | 0.010 | 0.005 | | 13.4 |
| 9 | Example of disclosure | Having slit-like gap | 0.471 | 0.40 | 27.7 | 0.010 | 0.008 | | 17.1 |
| 10 | Example of disclosure | Having slit-like gap | 0.280 | 0.78 | 12.0 | 0.017 | 0.017 | | 15.0 |
| 11 | Example of disclosure | Having slit-like gap | 0.206 | 0.48 | 17.4 | 0.011 | 0.008 | | 17.4 |
| 12 | Example of disclosure | Seamless | 0.345 | 0.70 | 14.0 | 0.017 | 0.019 | | 12.0 |
| 13 | Example of disclosure | Having slit-like gap | 0.265 | 0.28 | 18.0 | 0.012 | 0.016 | 2.3 | 16.3 |
| 14 | Example of disclosure | Seamless | 0.080 | 0.47 | 18.2 | 0.010 | 0.010 | 3.7 | 19.7 |
| 15 | Example of disclosure | Having slit-like gap | 0.440 | 0.66 | 14.1 | 0.023 | 0.011 | 1.7 | 17.3 |
| 16 | Example of disclosure | Seamless | 0.223 | 0.68 | 15.0 | 0.013 | 0.005 | | 19.0 |
| 17 | Example of disclosure | Having slit-like gap | 0.217 | 0.67 | 11.6 | 0.008 | 0.012 | 7.3 | 11.0 |
| 18 | Example of disclosure | Having slit-like gap | 0.438 | 0.41 | 10.4 | 0.018 | 0.019 | 8.4 | 17.8 |
| 19 | Example of disclosure | Having slit-like gap | 0.194 | 0.25 | 15.6 | 0.018 | 0.019 | | 13.8 |
| 20 | Example of disclosure | Having slit-like gap | 0.104 | 0.67 | 14.6 | 0.021 | 0.025 | 1.8 | 13.0 |
| 21 | Example of disclosure | Having slit-like gap | 0.265 | 0.56 | 16.3 | 0.015 | 0.012 | 3.5 | 13.5 |
| 22 | Example of disclosure | Having slit-like gap | 0.482 | 0.49 | 8.6 | 0.020 | 0.007 | 6.1 | 17.8 |
| 23 | Example of disclosure | Having slit-like gap | 0.107 | 0.32 | 14.5 | 0.009 | 0.019 | 8.9 | 13.1 |
| 24 | Example of disclosure | Having slit-like gap | 0.223 | 0.42 | 17.0 | 0.005 | 0.026 | 2.9 | 17.0 |
| 25 | Example of disclosure | Seamless | 0.135 | 0.80 | 22.0 | 0.020 | 0.023 | | 16.8 |
| 26 | Example of disclosure | Having slit-like gap | 0.080 | 0.21 | 9.4 | 0.009 | 0.017 | 3.2 | 19.0 |
| 27 | Example of disclosure | Seamless | 0.313 | 0.62 | 17.7 | 0.023 | 0.006 | 9.0 | 11.8 |
| 28 | Example of disclosure | Having slit-like gap | 0.320 | 0.27 | 14.0 | 0.015 | 0.015 | 8.9 | 19.0 |
| 29 | Example of disclosure | Having slit-like gap | 0.350 | 0.41 | 10.4 | 0.010 | 0.005 | | 20.0 |
| 30 | Example of disclosure | Seamless | 0.250 | 0.68 | 15.0 | 0.013 | 0.005 | | 19.0 |
| 31 | Example of disclosure | Having slit-like gap | 0.100 | 0.41 | 10.4 | 0.018 | 0.019 | | 17.8 |
| 32 | Example of disclosure | Having slit-like gap | 0.350 | 0.41 | 10.4 | 0.010 | 0.005 | | 20.0 |
| 33 | Example of disclosure | Having slit-like gap | 0.589 | 0.40 | 13.8 | 0.010 | 0.008 | | 9.8 |
| 34 | Example of disclosure | Having slit-like gap | 0.645 | 0.40 | 15.0 | 0.008 | 0.012 | | 10.0 |
| 35 | Example of disclosure | Having slit-like gap | 0.210 | 0.24 | 21.0 | 0.021 | 0.006 | | 5.0 |
| 36 | Example of disclosure | Having slit-like gap | 0.150 | 0.24 | 5.0 | 0.008 | 0.012 | | 29.5 |
| 37 | Example of disclosure | Having slit-like gap | 0.182 | 0.67 | 3.2 | 0.021 | 0.025 | | 13.0 |
| A1 | Comparative Example | Having slit-like gap | 0.080 | 0.21 | 1.0 | 0.009 | 0.017 | 3.2 | 13.0 |

(continued)

| Wire No. | Classification | Wire structure | Chemical component (mass%) of wire | | | | | | |
|---|---|---|---|---|---|---|---|---|---|
| | | | C | Si | Mn | P | S | Cu | Ni |
| A2 | Comparative Example | Seamless | 0.313 | 0.62 | 16.4 | 0.023 | 0006 | 9.0 | 1.0 |
| A3 | Comparative Example | Having slit-like gap | 0.080 | 0.21 | 1.0 | 0.009 | 0.017 | 3.2 | 1.0 |
| A4 | Comparative Example | Having slit-like gap | 0.265 | 0.56 | 2.0 | 0.015 | 0.012 | 3.5 | 16.6 |
| A5 | Comparative Example | Having slit-like gap | 0.280 | 0.02 | 2.8 | 0.010 | 0.019 | | 5.0 |
| A6 | Comparative Example | Having slit-like gap | 0.320 | 0.27 | 35.0 | 0.015 | 0.015 | 8.9 | 5.0 |

[Table 2-B]

| Wire No. | Classification | Chemical component (mass%) of wire | | | | | | | | | | |
|---|---|---|---|---|---|---|---|---|---|---|---|---|
| | | Cr | Mo | Nb | V | Co | Pb | Sn | W | Mg | Al | Ca |
| 1 | Example of disclosure | 8.0 | 3.0 | | | 0.1 | | | | | | |
| 2 | Example of disclosure | 7.0 | 3.0 | | 0.1 | | | | | | | |
| 3 | Example of disclosure | 6.0 | | | | | | | | | | |
| 4 | Example of disclosure | 5.0 | | 0.10 | | | | | | | | |
| 5 | Example of disclosure | 7.1 | | | | | | | | | | |
| 6 | Example of disclosure | 2.2 | 0.5 | | | | | | | | | |
| 7 | Example of disclosure | 7.7 | 9.0 | | | | | | | 0.20 | 0.500 | |
| 8 | Example of disclosure | 7.1 | 3.0 | | | | | | | 0.20 | | |
| 9 | Example of disclosure | 7.3 | 8.0 | | | | | | | | | |
| 10 | Example of disclosure | 8.0 | 7.8 | | | | | 0.3 | | | 1.000 | |
| 11 | Example of disclosure | 7.7 | 9.0 | | | | 0.3 | | | 0.20 | 0.500 | |
| 12 | Example of disclosure | 2.8 | 8.9 | | | | | | | | 3.000 | |
| 13 | Example of disclosure | 3.0 | 9.1 | 1.00 | | | | | | 0.57 | 1.000 | |
| 14 | Example of disclosure | 6.7 | 10.0 | 3.00 | | | | | | 0.69 | | |
| 15 | Example of disclosure | 4.7 | 5.2 | 2.00 | | | | | | | 2.000 | |
| 16 | Example of disclosure | 2.3 | 10.0 | | | | | | | | | |
| 17 | Example of disclosure | 6.2 | 9.8 | | | | | | | 0.20 | | 0.030 |
| 18 | Example of disclosure | 8.1 | 8.9 | | | | | | | | 0.039 | 0.100 |
| 19 | Example of disclosure | 4.4 | 8.0 | | | | | | 1.0 | | | 0.100 |
| 20 | Example of disclosure | 2.6 | 9.6 | | | | | | 3.0 | 0.33 | 3.000 | 0.080 |
| 21 | Example of disclosure | 5.2 | 8.0 | | 1.0 | | | | 4.0 | 0.77 | | 0.080 |
| 22 | Example of disclosure | 3.9 | 9.2 | 3.00 | 5.0 | | | | 5.0 | 0.72 | 0.023 | 0.050 |
| 23 | Example of disclosure | 5.6 | 8.6 | 3.00 | 5.0 | | | | | 0.54 | 0.043 | 0.010 |
| 24 | Example of disclosure | 4.1 | 9.7 | 1.00 | | | | | 6.0 | 0.86 | 0.016 | 0.030 |
| 25 | Example of disclosure | 5.0 | 9.8 | 3.00 | | | | | 1.0 | 0.48 | 0.008 | 0.050 |
| 26 | Example of disclosure | 8.5 | 6.5 | 1.00 | 3.0 | | | | 2.0 | 0.56 | 1.000 | 0.020 |
| 27 | Example of disclosure | 6.6 | 8.0 | 2.00 | 1.0 | | | | 5.0 | 0.06 | 0.033 | |
| 28 | Example of disclosure | 2.7 | 7.6 | 5.00 | 5.0 | | | | 3.0 | 0.26 | 0.036 | 0.080 |
| 29 | Example of disclosure | 7.1 | 3.0 | | | 0.1 | | | | 0.20 | | |

(continued)

| Wire No. | Classification | Chemical component (mass%) of wire | | | | | | | | | | |
|---|---|---|---|---|---|---|---|---|---|---|---|---|
| | | Cr | Mo | Nb | V | Co | Pb | Sn | W | Mg | Al | Ca |
| 30 | Example of disclosure | 2.3 | | | | | | 0.8 | | | | |
| 31 | Example of disclosure | 8.1 | | | | | | | | | | |
| 32 | Example of disclosure | 7.1 | 3.0 | | | | | | | 0.35 | | |
| 33 | Example of disclosure | | | | | | | | | | | |
| 34 | Example of disclosure | | | | | | | | | 0.20 | | 0.030 |
| 35 | Example of disclosure | | | | | | | | | 0.40 | | |
| 36 | Example of disclosure | | | | | | | | | | | |
| 37 | Example of disclosure | 4.5 | 5.0 | | | | | | | 0.33 | | |
| A1 | Comparative Example | 8.5 | | | | | | | | 0.56 | | |
| A2 | Comparative Example | 6.6 | 2.0 | | | | | | | 0.06 | | |
| A3 | Comparative Example | 8.5 | | | | | | | | 0.56 | | |
| A4 | Comparative Example | 5.2 | 8.0 | | 1.0 | | | | 4.0 | 0.77 | | 0.080 |
| A5 | Comparative Example | 2.8 | | | | | | 2.0 | | 0.56 | 1.000 | 0.020 |
| A6 | Comparative Example | 2.7 | 7.6 | | | | | | | 0.26 | | |

[Table 2-C]

| Wire No. | Classification | Chemical component (mass%) of wire | | | | | | | | Remarks |
|---|---|---|---|---|---|---|---|---|---|---|
| | | Ti | B | REM | Bi | N | O | Fr powder | Ni/Mn | |
| 1 | Example of disclosure | | | | | 0.008 | 0.002 | | 0.160 | |
| 2 | Example of disclosure | 0.080 | | | | 0.010 | 0.002 | | 1.067 | |
| 3 | Example of disclosure | | | | | 0.015 | 0.001 | | 0.143 | PTFE coated |
| 4 | Example of disclosure | | | | | 0.020 | 0.002 | | 1.423 | |
| 5 | Example of disclosure | | | | | 0.001 | 0.002 | | 1.947 | |
| 6 | Example of disclosure | 0.080 | | | | 0.095 | 0.002 | | 0.769 | |
| 7 | Example of disclosure | | | | 0.002 | 0.365 | 0.002 | | 0.268 | |
| 8 | Example of disclosure | | | | | 0.241 | 0.001 | | 1.288 | |
| 9 | Example of disclosure | 0.200 | | | | 0.514 | 0.002 | | 0.617 | |
| 10 | Example of disclosure | 0.100 | | | | 0.829 | 0.001 | 0.10 | 1.250 | |
| 11 | Example of disclosure | | | | 0.002 | 0.365 | 0.006 | | 1.002 | |

(continued)

| Wire No. | Classification | Chemical component (mass%) of wire | | | | | | | | Remarks |
|---|---|---|---|---|---|---|---|---|---|---|
| | | Ti | B | REM | Bi | N | O | Fr powder | Ni/Mn | |
| 12 | Example of disclosure | 1.000 | | | | 0.216 | 0.002 | | 0.858 | |
| 13 | Example of disclosure | | | | | 0.195 | 0.002 | | 0.906 | PTFE coated |
| 14 | Example of disclosure | | | | 0.048 | 0.001 | 0.007 | | 1.082 | |
| 15 | Example of disclosure | | | | 0.039 | 0.118 | 0.004 | | 1.227 | |
| 16 | Example of disclosure | | | | 0.049 | 0.962 | 0.007 | | 1.267 | |
| 17 | Example of disclosure | | | 0.002 | 0.014 | 0.647 | 0.005 | | 0.949 | |
| 18 | Example of disclosure | | | | | 0.863 | 0.007 | | 1.712 | PTFE coated |
| 19 | Example of disclosure | | | | | 0.916 | 0.003 | | 0.886 | |
| 20 | Example of disclosure | 0.040 | | | | 0.001 | 0.008 | | 0.889 | |
| 21 | Example of disclosure | | | | | 0.824 | 0.011 | | 0.826 | |
| 22 | Example of disclosure | 0.060 | | | | 0.571 | 0.011 | | 2.075 | |
| 23 | Example of disclosure | 0.080 | | | | 0.509 | 0.009 | | 0.903 | |
| 24 | Example of disclosure | 0.050 | | | | 0.468 | 0.011 | | 1.000 | |
| 25 | Example of disclosure | | | | | 0.450 | 0.011 | | 0.764 | |
| 26 | Example of disclosure | 0.030 | | | | 0.250 | 0.007 | | 2.032 | PTFE coated |
| 27 | Example of disclosure | 0.060 | 0.0010 | | 0.025 | 0.663 | 0.012 | | 0.669 | |
| 28 | Example of disclosure | 1.000 | 0.0030 | | 0.006 | 0.574 | 0.007 | | 1.357 | |
| 29 | Example of disclosure | | | | | 0.010 | 0.002 | | 1.923 | |
| 30 | Example of disclosure | | | | | 0.015 | 0.002 | | 1.267 | |
| 31 | Example of disclosure | | | | | 0.010 | 0.008 | | 1.712 | PTFE coated |
| 32 | Example of disclosure | | 0.0006 | | | 0.010 | 0.005 | | 1.923 | |
| 33 | Example of disclosure | 0.200 | | | | 0.010 | 0.014 | | 0.710 | |

(continued)

| Wire No. | Classification | Chemical component (mass%) of wire | | | | | | | | Remarks |
|---|---|---|---|---|---|---|---|---|---|---|
| | | Ti | B | REM | Bi | N | O | Fr powder | Ni/Mn | |
| 34 | Example of disclosure | | | 0.002 | 0.014 | 0.647 | 0.003 | | 0.667 | |
| 35 | Example of disclosure | | | | | 0.350 | 0.002 | | 0.238 | |
| 36 | Example of disclosure | | | | | 0.345 | 0.018 | | 5.900 | |
| 37 | Example of disclosure | | | | | 0.035 | 0.015 | | 4.063 | |
| A1 | Comparative Example | | | | | 0.250 | 0.004 | | 13.000 | |
| A2 | Comparative Example | | | | | 0.663 | 0.002 | | 0.061 | |
| A3 | Comparative Example | | | | | 0.250 | 0.001 | | 1.000 | |
| A4 | Comparative Example | | | | | 0.824 | 0.006 | | 8.300 | |
| A5 | Comparative Example | 0.030 | | | | 0.024 | 0.016 | | 1.786 | |
| A6 | Comparative Example | | | | | 0.574 | 0.014 | | 0.143 | |

[Table 2-D]

| Wire No. | Classification | Total (mass%) of equivalent values of oxide | | | | | | | | | |
|---|---|---|---|---|---|---|---|---|---|---|---|
| | | Ti oxide | Si oxide | Zr oxide | Al oxide | Na oxide | K oxide | Mg oxide | Ca oxide | Mn oxide | Fe oxide |
| 1 | Example of disclosure | | | | | | | | | | |
| 2 | Example of disclosure | | | | | | | | | | |
| 3 | Example of disclosure | 5.00 | | 0.80 | | 0.01 | | | | | |
| 4 | Example of disclosure | | | | | | | | | | |
| 5 | Example of disclosure | 5.40 | 0.20 | | | 0.10 | 0.05 | | | | |
| 6 | Example of disclosure | 6.65 | 0.10 | | | 0.01 | 0.01 | | | | |
| 7 | Example of disclosure | 7.68 | 0.76 | | 0.34 | 0.05 | 0.05 | | | | |
| 8 | Example of disclosure | 5.10 | 0.32 | | | 0.05 | 0.05 | | | | |
| 9 | Example of disclosure | 4.32 | 0.76 | | | 0.05 | 0.05 | | | 1.58 | |

(continued)

| Wire No. | Classification | Total (mass%) of equivalent values of oxide | | | | | | | | | |
|---|---|---|---|---|---|---|---|---|---|---|---|
| | | Ti oxide | Si oxide | Zr oxide | Al oxide | Na oxide | K oxide | Mg oxide | Ca oxide | Mn oxide | Fe oxide |
| 10 | Example of disclosure | 5.14 | 0.48 | | | 0.05 | 0.05 | | | | |
| 11 | Example of disclosure | 7.68 | 0.76 | | 0.34 | 0.05 | 0.05 | | | | |
| 12 | Example of disclosure | 4.56 | 0.46 | | | 0.05 | 0.05 | | | | 1.45 |
| 13 | Example of disclosure | 5.17 | 0.45 | | | 0.05 | 0.05 | | | | |
| 14 | Example of disclosure | 5.14 | 0.88 | 0.32 | | 0.05 | 0.05 | | | | |
| 15 | Example of disclosure | 7.03 | 0.79 | | | 0.05 | 0.05 | | 1.58 | | |
| 16 | Example of disclosure | 7.85 | 0.26 | | | 1.00 | 1.00 | 0.20 | | | |
| 17 | Example of disclosure | 5.98 | 0.48 | | | 1.00 | 1.00 | 0.50 | | 1.17 | |
| 18 | Example of disclosure | 4.65 | 0.52 | | 0.27 | 1.00 | 1.00 | 1.00 | | | |
| 19 | Example of disclosure | 6.83 | 0.55 | 0.22 | | 1.00 | 1.00 | 1.50 | | | 1.18 |
| 20 | Example of disclosure | 5.31 | 0.15 | | | 1.00 | 1.00 | | | | |
| 21 | Example of disclosure | 5.11 | 0.94 | | | 1.00 | 1.00 | | 1.25 | | |
| 22 | Example of disclosure | 5.54 | 0.37 | | | 1.00 | 1.00 | | | | |
| 23 | Example of disclosure | 6.70 | 0.94 | | | 1.00 | 1.00 | | | 1.78 | |
| 24 | Example of disclosure | 6.47 | 0.13 | | | 1.00 | 1.00 | 0.05 | | | |
| 25 | Example of disclosure | 5.68 | 0.77 | | 0.28 | 0.01 | 0.01 | 0.01 | 1.63 | | |
| 26 | Example of disclosure | 4.90 | 1.00 | | | 0.01 | 0.01 | 0.01 | | | |
| 27 | Example of disclosure | 4.31 | 0.17 | | | 0.01 | 0.01 | 0.01 | | | |
| 28 | Example of disclosure | 4.48 | 0.62 | | | 0.01 | 0.01 | 0.01 | | | |
| 29 | Example of disclosure | 5.10 | 0.32 | | | 0.05 | 0.05 | | | | |
| 30 | Example of disclosure | 7.85 | 0.26 | | | 1.00 | 1.00 | 0.20 | | | |
| 31 | Example of disclosure | 4.65 | 0.52 | | 0.27 | 1.00 | 1.00 | 1.00 | | | |

(continued)

| Wire No. | Classification | Total (mass%) of equivalent values of oxide | | | | | | | | | |
|---|---|---|---|---|---|---|---|---|---|---|---|
| | | Ti oxide | Si oxide | Zr oxide | Al oxide | Na oxide | K oxide | Mg oxide | Ca oxide | Mn oxide | Fe oxide |
| 32 | Example of disclosure | 5.10 | 0.50 | 0.50 | | 0.10 | 0.05 | | | | |
| 33 | Example of disclosure | 4.32 | 0.30 | | | 0.05 | 0.05 | | | | |
| 34 | Example of disclosure | 5.98 | 0.48 | | | 1.00 | 1.00 | 0.50 | | 1.17 | |
| 35 | Example of disclosure | 4.31 | 0.17 | | | 0.01 | 0.01 | 0.01 | | | |
| 36 | Example of disclosure | 5.14 | 0.32 | | | 0.05 | 0.05 | | | | |
| 37 | Example of disclosure | 5.31 | 0.15 | | | 1.00 | 1.00 | | | | |
| A1 | Comparative Example | 4.90 | 1.00 | | | 0.01 | 0.01 | 0.01 | | | |
| A2 | Comparative Example | 6.70 | 0.94 | | | 1.00 | 1.00 | | | 1.78 | |
| A3 | Comparative Example | 6.65 | 0.74 | | | 0.01 | 0.01 | 0.01 | | | 1.69 |
| A4 | Comparative Example | 5.11 | 0.94 | | | 1.00 | 1.00 | | 1.25 | | |
| A5 | Comparative Example | 4.56 | 0.46 | | | 0.05 | 0.05 | | | | 1.45 |
| A6 | Comparative Example | 7.68 | 0.76 | | 0.34 | 0.05 | 0.05 | | | | |

[Table 2-E]

| Wire No. | Classification | Fluoride (mass%) | | | | | | |
|---|---|---|---|---|---|---|---|---|
| | | $K_2SiF_6$ | $K_2ZrF_6$ | NaF | $Na_3AlF_6$ | $CaF_2$ | $MgF_2$ | Fluoride total amount |
| 1 | Example of disclosure | | | | | | | |
| 2 | Example of disclosure | | | | | | | |
| 3 | Example of disclosure | 0.05 | | | 0.10 | | | 0.15 |
| 4 | Example of disclosure | | | | | | | |
| 5 | Example of disclosure | | 0.20 | | | | 0.01 | 0.21 |
| 6 | Example of disclosure | | | | | 2.00 | | 2.00 |
| 7 | Example of disclosure | | | 0.35 | | | 0.35 | 0.70 |
| 8 | Example of disclosure | | 0.20 | | | | 0.35 | 0.55 |
| 9 | Example of disclosure | | 0.35 | | | | 0.35 | 0.70 |
| 10 | Example of disclosure | 0.35 | | | | | 0.35 | 0.70 |
| 11 | Example of disclosure | | | 0.35 | | | 0.35 | 0.70 |
| 12 | Example of disclosure | 0.35 | | | | | 0.35 | 0.70 |
| 13 | Example of disclosure | | | 0.36 | | | 0.35 | 0.71 |

(continued)

| Wire No. | Classification | Fluoride (mass%) | | | | | | |
|---|---|---|---|---|---|---|---|---|
| | | $K_2SiF_6$ | $K_2ZrF_6$ | NaF | $Na_3AlF_6$ | $CaF_2$ | $MgF_2$ | Fluoride total amount |
| 14 | Example of disclosure | 0.35 | | | | | 0.35 | 0.70 |
| 15 | Example of disclosure | | | 0.35 | | | 0.35 | 0.70 |
| 16 | Example of disclosure | | | | | 1.00 | | 1.00 |
| 17 | Example of disclosure | | | 0.50 | 0.50 | | 1.00 | 2.00 |
| 18 | Example of disclosure | | 1.00 | | | | | 1.00 |
| 19 | Example of disclosure | | | | | 1.50 | 0.50 | 2.00 |
| 20 | Example of disclosure | | | 0.50 | | 1.50 | | 2.00 |
| 21 | Example of disclosure | 0.50 | | | | 1.50 | | 2.00 |
| 22 | Example of disclosure | | | | | 1.50 | | 1.50 |
| 23 | Example of disclosure | 1.00 | | | | | | 1.00 |
| 24 | Example of disclosure | | 0.50 | | | 1.00 | | 1.50 |
| 25 | Example of disclosure | | | | | 1.00 | | 1.00 |
| 26 | Example of disclosure | | | | | 1.00 | 1.00 | 2.00 |
| 27 | Example of disclosure | | | 1.00 | | 1.00 | | 2.00 |
| 28 | Example of disclosure | 1.00 | | | | 1.00 | | 2.00 |
| 29 | Example of disclosure | | 0.20 | | | | 0.35 | 0.55 |
| 30 | Example of disclosure | | | | | 1.00 | | 1.00 |
| 31 | Example of disclosure | | 1.00 | | | | | 1.00 |
| 32 | Example of disclosure | | | 0.50 | | | | 0.50 |
| 33 | Example of disclosure | 0.30 | 0.35 | | | | 0.35 | 1.00 |
| 34 | Example of disclosure | | | 0.50 | 0.50 | | 1.00 | 2.00 |
| 35 | Example of disclosure | | | 0.30 | | | | 0.30 |
| 36 | Example of disclosure | | | 0.30 | | | | 0.30 |
| 37 | Example of disclosure | | | 0.50 | | 1.50 | | 2.00 |
| A1 | Comparative Example | | | | | 1.00 | 1.00 | 2.00 |
| A2 | Comparative Example | 1.00 | | 1.00 | | 1.00 | | 3.00 |
| A3 | Comparative Example | 0.20 | 0.20 | 0.20 | 0.20 | 0.20 | 1.00 | 2.00 |
| A4 | Comparative Example | 0.50 | | | | 1.50 | | 2.00 |
| A5 | Comparative Example | | 0.35 | | | | | 0.35 |
| A6 | Comparative Example | | | 0.35 | | | 0.35 | 0.70 |

[Table 2-F]

| Wire No. | Classification | Slag determination | | |
|---|---|---|---|---|
| | | $NaO_2 + NaF + Na_3AlF_6$ | $K_2O + K_2SiF_6 + K_2ZrF_6$ | X value |
| 1 | Example of disclosure | | | |
| 2 | Example of disclosure | | | |
| 3 | Example of disclosure | 0.11 | 0.05 | 0.43 |
| 4 | Example of disclosure | | | |

(continued)

| Wire No. | Classification | Slag determination | | |
|---|---|---|---|---|
| | | $NaO_2 + NaF + Na_3AlF_6$ | $K_2O + K_2SiF_6 + K_2ZrF_6$ | X value |
| 5 | Example of disclosure | 0.10 | 0.25 | 3.82 |
| 6 | Example of disclosure | 0.01 | 0.01 | 145.45 |
| 7 | Example of disclosure | 0.40 | 0.05 | 3.04 |
| 8 | Example of disclosure | 0.05 | 0.25 | 7.43 |
| 9 | Example of disclosure | 0.05 | 0.40 | 1.46 |
| 10 | Example of disclosure | 0.05 | 0.40 | 6.60 |
| 11 | Example of disclosure | 0.40 | 0.05 | 3.04 |
| 12 | Example of disclosure | 0.05 | 0.40 | 1.79 |
| 13 | Example of disclosure | 0.41 | 0.05 | 7.05 |
| 14 | Example of disclosure | 0.05 | 0.40 | 2.80 |
| 15 | Example of disclosure | 0.40 | 0.05 | 1.45 |
| 16 | Example of disclosure | 1.00 | 1.00 | 5.88 |
| 17 | Example of disclosure | 2.00 | 1.00 | 2.76 |
| 18 | Example of disclosure | 1.00 | 2.00 | 2.18 |
| 19 | Example of disclosure | 1.00 | 1.00 | 3.92 |
| 20 | Example of disclosure | 1.50 | 1.00 | 12.61 |
| 21 | Example of disclosure | 1.00 | 1.50 | 4.55 |
| 22 | Example of disclosure | 1.00 | 1.00 | 8.76 |
| 23 | Example of disclosure | 1.00 | 2.00 | 1.34 |
| 24 | Example of disclosure | 1.00 | 1.50 | 9.09 |
| 25 | Example of disclosure | 0.01 | 0.01 | 2.97 |
| 26 | Example of disclosure | 0.01 | 0.01 | 12.81 |
| 27 | Example of disclosure | 1.01 | 0.01 | 70.27 |
| 28 | Example of disclosure | 0.01 | 1.01 | 20.47 |
| 29 | Example of disclosure | 0.05 | 0.25 | 7.43 |
| 30 | Example of disclosure | 1.00 | 1.00 | 5.88 |
| 31 | Example of disclosure | 1.00 | 2.00 | 2.18 |
| 32 | Example of disclosure | 0.60 | 0.05 | 2.33 |
| 33 | Example of disclosure | 0.05 | 0.70 | 14.29 |
| 34 | Example of disclosure | 2.00 | 1.00 | 2.76 |
| 35 | Example of disclosure | 0.31 | 0.01 | 8.11 |
| 36 | Example of disclosure | 0.35 | 0.05 | 4.05 |
| 37 | Example of disclosure | 1.50 | 1.00 | 12.61 |
| A1 | Comparative Example | 0.01 | 0.01 | 12.81 |
| A2 | Comparative Example | 2.00 | 2.00 | 4.84 |
| A3 | Comparative Example | 0.41 | 0.41 | 4.01 |
| A4 | Comparative Example | 1.00 | 1.50 | 4.55 |
| A5 | Comparative Example | 0.05 | 0.40 | 0.89 |

(continued)

| Wire No. | Classification | Slag determination | | |
|---|---|---|---|---|
| | | $NaO_2 + NaF + Na_3AlF_6$ | $K_2O + K_2SiF_6 + K_2ZrF_6$ | X value |
| A6 | Comparative Example | 0.40 | 0.05 | 3.04 |

The balance (that is, components other than the respective components shown in the table) of the steel sheath shown in Tables 1-A and 1-B and the balance (that is, components other than the respective components shown in the table) of the flux-cored wire shown in Tables 2-A to 2-F are iron and impurities.

Among the flux-cored wires shown in Tables 2-A to 2-F, the flux-cored wire described as "Seamless" in the section of "Wire structure" has a seamless shape, and is a wire to which palm oil is applied as a lubricant unless otherwise specified in the section of "Remarks". The flux-cored wire described as "Having slit-like gap" in the section of "Wire structure" is a wire having a slit-like gap, and a wire described as "PTFE coated" in the section of "Remarks" is a wire coated with PTFE oil.

Each element contained in the flux-cored wires shown in Tables 2-A to 2-F is in a form of a steel sheath or a metal powder.

In Tables 1-A and 1-B, numerical values outside the range defined in the disclosure are underlined.

In Tables 1-A, 1-B, and 2-A to 2-F, blanks in the tables related to the contents of chemical components, compounds, and the like mean that the chemical components, compounds, and the like are not intentionally contained. These chemical components, compounds, and the like may be inevitably mixed or generated.

[Evaluation]

Evaluation was performed by performing gas shield arc welding by vertical upward welding using the flux-cored wires of examples of the disclosure and comparative examples. Specifically, evaluation was performed by the method described below.

As a steel plate to be welded, 9% Ni steel (steel plate according to JIS G 3127:2013 SL9N590) having a plate thickness of 50 mm was used, and the type of welding gas in the evaluation was Ar-20%$CO_2$ gas. In the evaluation, all the welding currents were direct current, and all the polarities of the wires were positive.

The welding conditions for the evaluation were the conditions shown in Table 3.

[Table 3]

| Current A | Voltage V | Rate mm/min | Heat input kJ/mm |
|---|---|---|---|
| 220 | 30 | 16 | 25 |

(Evaluation of Fume Amount)

The amount of fumes during gas shield arc welding using the flux-cored wires of examples of the disclosure and comparative examples was evaluated.

The measurement of the amount of fumes generated by welding was performed by a total amount collection method using a high-volume air sampler in accordance with JIS Z3930:2013 (Determination of fume emission rate during arc welding). A flux-cored wire having a fume amount of 1000 mg/min or less was rated as "passed" with respect to the amount of fumes, and a flux-cored wire having a fume amount of more than 1000 mg/min was rated as "failed".

(Evaluation of Low-Temperature Toughness)

Using the flux-cored wires of examples of the disclosure and comparative examples, the steel plate was subjected to gas shield arc welding, and three impact test pieces (V-notch test pieces having a notch depth of 2 mm) were taken from the center of the weld metal in a plate thickness direction.

The three impact test pieces were subjected to a Charpy impact test in accordance with JIS Z2242:2005 at -196°C.

A case where a Charpy absorbed energy average value of the three impact test pieces at -196°C was 34 J or more was rated as "excellent", a case where a Charpy absorbed energy average value thereof was 27 J or more and less than 34 J was rated as "passed", and a case where a Charpy absorbed energy average value thereof was less than 27 J was rated as "failed".

(Comprehensive Evaluation)

A case where the evaluation of the amount of fumes was "passed" and the evaluation of the low-temperature toughness was "excellent" or "passed" was evaluated as "passed", and a case where either one of the evaluation of the amount of fumes of "failed" or the evaluation of the low-temperature toughness of "fail" was satisfied was evaluated as "failed".

[Table 4]

| Wire No. | Classification | Amount of fumes | Low-temperature toughness | Comprehensive determination |
|---|---|---|---|---|
| 1 | Example of disclosure | Passed | Passed | Passed |
| 2 | Example of disclosure | Passed | Excellent | Passed |
| 3 | Example of disclosure | Passed | Passed | Passed |
| 4 | Example of disclosure | Passed | Excellent | Passed |
| 5 | Example of disclosure | Passed | Excellent | Passed |
| 6 | Example of disclosure | Passed | Passed | Passed |
| 7 | Example of disclosure | Passed | Passed | Passed |
| 8 | Example of disclosure | Passed | Excellent | Passed |
| 9 | Example of disclosure | Passed | Passed | Passed |
| 10 | Example of disclosure | Passed | Excellent | Passed |
| 11 | Example of disclosure | Passed | Excellent | Passed |
| 12 | Example of disclosure | Passed | Passed | Passed |
| 13 | Example of disclosure | Passed | Excellent | Passed |
| 14 | Example of disclosure | Passed | Excellent | Passed |
| 15 | Example of disclosure | Passed | Excellent | Passed |
| 16 | Example of disclosure | Passed | Passed | Passed |
| 17 | Example of disclosure | Passed | Passed | Passed |
| 18 | Example of disclosure | Passed | Excellent | Passed |
| 19 | Example of disclosure | Passed | Passed | Passed |
| 20 | Example of disclosure | Passed | Passed | Passed |
| 21 | Example of disclosure | Passed | Passed | Passed |
| 22 | Example of disclosure | Passed | Excellent | Passed |
| 23 | Example of disclosure | Passed | Passed | Passed |
| 24 | Example of disclosure | Passed | Excellent | Passed |
| 25 | Example of disclosure | Passed | Passed | Passed |
| 26 | Example of disclosure | Passed | Excellent | Passed |
| 27 | Example of disclosure | Passed | Passed | Passed |
| 28 | Example of disclosure | Passed | Excellent | Passed |
| 29 | Example of disclosure | Passed | Excellent | Passed |
| 30 | Example of disclosure | Passed | Excellent | Passed |
| 31 | Example of disclosure | Passed | Excellent | Passed |
| 32 | Example of disclosure | Passed | Excellent | Passed |
| 33 | Example of disclosure | Passed | Passed | Passed |
| 34 | Example of disclosure | Passed | Passed | Passed |

(continued)

| Wire No. | Classification | Amount of fumes | Low-temperature toughness | Comprehensive determination |
|---|---|---|---|---|
| 35 | Example of disclosure | Passed | Passed | Passed |
| 36 | Example of disclosure | Passed | Excellent | Passed |
| 37 | Example of disclosure | Passed | Excellent | Passed |
| A1 | Comparative Example | Passed | Fail | Failed |
| A2 | Comparative Example | Passed | Fail | Failed |
| A3 | Comparative Example | Passed | Fail | Failed |
| A4 | Comparative Example | Passed | Fail | Failed |
| A5 | Comparative Example | Passed | Fail | Failed |
| A6 | Comparative Example | Failed | Fail | Failed |

It is found that the flux-cored wire of the example of the disclosure has a small amount of fumes and is excellent in the low-temperature toughness of the resulting weld metal.

On the other hand, the comparative example did not satisfy any of the requirements specified in the disclosure, and thus failed in one or more evaluation items.

Although not shown in the table, Wire Nos. 1, 2, and 4 in which the oxide and the fluoride were not contained in the flux were slightly inferior in welding workability (particularly, vertical weldability) to the other examples of the disclosure.

**Claims**

1. A flux-cored wire for welding, comprising:

   a steel sheath; and
   a flux filled in the steel sheath,
   wherein a chemical composition of the steel sheath consists of, by mass% with respect to a total mass of the steel sheath:

   C: from 0% to 0.650%,
   Si: from 0.03% to 0.50%,
   Mn: from 3.1% to 30.0%,
   P: from 0% to 0.050%,
   S: from 0% to 0.050%,
   Cu: from 0% to 5.0%,
   Ni: from 1.0% to 30.0%,
   Cr: from 0% to 10.0%,
   Mo: from 0% to 10.0%,
   Nb: from 0% to 1.0%,
   V: from 0% to 1.0%,
   Co: from 0% to 1.0%,
   Pb: from 0% to 1.0%,
   Sn: from 0% to 1.0%,
   Al: from 0% to 0.10%,
   Ti: from 0% to 0.10%,
   B: from 0% to 0.1000%,
   N: from 0% to 0.500%,
   O: from 0% to 0.0050%, and
   balance: Fe and impurities,
   wherein:

   a total (Mn + Ni) of a content of the Mn and a content of the Ni is 5.0% or more,

a total (Mn + Ni + Cr) of the content of the Mn, the content of the Ni, and a content of the Cr is 15.0% or more, and
a fraction of fcc in the steel sheath as determined by a magnetic induction method is 70% or more.

2. The flux-cored wire according to claim 1, wherein in the chemical composition of the steel sheath, a mass ratio (Ni/Mn) of the content of the Mn and the content of the Ni is 0.10 or more.

3. The flux-cored wire according to claim 2, wherein the mass ratio (Ni/Mn) is 1.00 or more.

4. The flux-cored wire according to any one of claims 1 to 3, wherein a content of the Ti is Ti: from 0.003% to 0.10%.

5. The flux-cored wire according to any one of claims 1 to 4, wherein a metal component in a chemical composition of the flux-cored wire consists of, by mass% with respect to a total mass of the flux-cored wire:

C: from 0.020% to 0.650%,
Si: from 0.20% to 0.80%,
Mn: from 1.5% to 30.0%,
P: from 0% to 0.050%,
S: from 0% to 0.050%,
Cu: from 0% to 10.0%,
Ni: from 5.0% to 30.0%,
Cr: from 2.0% to 10.0%,
Mo: from 0% to 10.0%,
Nb: from 0% to 5.00%,
V: from 0% to 5.0%,
Co: from 0% to 1.0%,
Pb: from 0% to 1.0%,
Sn: from 0% to 1.0%,
W: from 0% to 10.0%,
Mg: from 0% to 1.00%,
Al: from 0% to 3.000%,
Ca: from 0% to 0.100%,
Ti: from 0% to 3.000%,
B: from 0% to 0.1000%,
REM: from 0% to 0.100%,
Bi: from 0% to 0.050%,
N: from 0% to 1.000%,
O: from 0% to 0.020%, and
balance: Fe and impurities.

6. The flux-cored wire according to claim 5, wherein in the chemical composition of the flux-cored wire, a mass ratio (Ni/Mn) of a content of the Mn and a content of the Ni is 0.200 or more.

7. The flux-cored wire according to any one of claims 1 to 6, wherein the flux-cored wire contains, by mass% with respect to a total mass of the flux-cored wire,

a total of $TiO_2$-equivalent values of a Ti oxide of from 3.00% to 8.00%,
a total of $SiO_2$-equivalent values of a Si oxide of from 0% to 1.00%,
a total of $ZrO_2$-equivalent values of a Zr oxide of from 0% to 0.80%, and
a total of $Al_2O_3$-equivalent values of an Al oxide of from 0% to 0.80%.

8. The flux-cored wire according to any one of claims 1 to 7, wherein the flux-cored wire contains, by mass% with respect to a total mass of the flux-cored wire,

one or more fluorides of $K_2SiF_6$, $K_2ZrF_6$, NaF, $Na_3AlF_6$, $CaF_2$, and $MgF_2$, a total of which is from 0.10% to 2.00%,
one or more Na-containing compounds of Na oxide, NaF, and $Na_3AlF_6$, a total of which is from 0.01% to 2.00%, wherein the Na oxide is a $Na_2O$-equivalent value, and
one or more K-containing compounds of K oxide, $K_2SiF_6$, and $K_2ZrF_6$, a total of which is from 0.01% to 2.00%, wherein the K oxide is a $K_2O$-equivalent value.

9. The flux-cored wire according to any one of claims 1 to 8, wherein an X value as calculated by the following Formula A is from 0.10 to 160.00,

$$X = (8 \times CaF_2 + 5 \times MgF_2 + 5 \times NaF + 5 \times K_2SiF_6 + 5 \times K_2ZrF_6 + Na_3AlF_6)/(SiO_2 + Al_2O_3 + ZrO_2 + 0.5 \times MgO + CaO + 0.5 \times Na_2O + 0.5 \times K_2O + MnO_2 + FeO) \quad \text{Formula A}$$

wherein, $CaF_2$, $MgF_2$, $NaF$, $K_2SiF_6$, $K_2ZrF_6$, and $Na_3AlF_6$ each indicate, by mass% with respect to a total mass of the flux-cored wire, a content of a compound represented by each chemical formula; $SiO_2$ represents a total of $SiO_2$-equivalent values of a Si oxide, $Al_2O_3$ represents a total of $Al_2O_3$-equivalent values of an A1 oxide, $ZrO_2$ represents a total of $ZrO_2$-equivalent values of a Zr oxide, MgO represents a total of MgO-equivalent values of a Mg oxide, CaO represents a total of CaO-equivalent values of a Ca oxide, $Na_2O$ represents a total of $Na_2O$-equivalent values of a Na oxide, $K_2O$ represents a total of $K_2O$-equivalent values of a K oxide, $MnO_2$ represents a total of $MnO_2$-equivalent values of a Mn oxide, and FeO represents a total of FeO-equivalent values of a Fe oxide; and
wherein the $SiO_2$-equivalent values, the $Al_2O_3$-equivalent values, the $ZrO_2$-equivalent values, the MgO-equivalent values, the CaO-equivalent values, the $Na_2O$-equivalent values, the $K_2O$-equivalent values, the $MnO_2$-equivalent values, and the FeO-equivalent values in Formula A are represented by mass% with respect to the total mass of the flux-cored wire.

10. The flux-cored wire according to any one of claims 1 to 9, wherein the steel sheath has no welded part at a seam.

11. The flux-cored wire according to any one of claims 1 to 9, wherein the steel sheath has a welded part at a seam.

12. The flux-cored wire according to any one of claims 1 to 11, wherein one or both of polytetrafluoroethylene oil or perfluoropolyether oil is applied to a surface of the flux-cored wire.

13. A method of manufacturing a welded joint, comprising a step of welding a steel material by using the flux-cored wire according to any one of claims 1 to 12.

## INTERNATIONAL SEARCH REPORT

| International application No. |
| --- |
| **PCT/JP2022/036865** |

| A. | CLASSIFICATION OF SUBJECT MATTER |
| --- | --- |

*B23K 35/30*(2006.01)i; *B23K 35/368*(2006.01)i
FI:   B23K35/30 A; B23K35/368 A; B23K35/30 320A

According to International Patent Classification (IPC) or to both national classification and IPC

| B. | FIELDS SEARCHED |
| --- | --- |

Minimum documentation searched (classification system followed by classification symbols)

B23K35/30; B23K35/368

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2019-025524 A (NIPPON STEEL & SUMITOMO METAL CORP.) 21 February 2019 (2019-02-21) | 1-13 |
| A | JP 2014-050882 A (NIPPON STEEL & SUMITOMO METAL CORP.) 20 March 2014 (2014-03-20) | 1-13 |
| A | JP 2014-018852 A (KOBE STEEL, LTD.) 03 February 2014 (2014-02-03) | 1-13 |
| A | JP 2009-034724 A (NIPPON STEEL & SUMIKIN WELDING CO., LTD.) 19 February 2009 (2009-02-19) | 1-13 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 November 2022** | **13 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/036865**

| Patent document cited in search report | | | Publication date (day/month/year) | Patent family member(s) | Publication date (day/month/year) |
|---|---|---|---|---|---|
| JP | 2019-025524 | A | 21 February 2019 | (Family: none) | |
| JP | 2014-050882 | A | 20 March 2014 | (Family: none) | |
| JP | 2014-018852 | A | 03 February 2014 | (Family: none) | |
| JP | 2009-034724 | A | 19 February 2009 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008246507 A

**Non-patent literature cited in the description**

- New Edition, Introduction of Technology of Welding and Joining. Japan Welding Society, 2008, 111